(19) Europäisches Patentamt
European Patent Office
Office européen des brevets

(11) EP 4 288 481 B1

(12) EUROPEAN PATENT SPECIFICATION

(45) Date of publication and mention of the grant of the patent:
**06.05.2026 Bulletin 2026/19**

(21) Application number: **22709610.4**

(22) Date of filing: **07.02.2022**

(51) International Patent Classification (IPC):
***C08G 65/48*** *(2006.01)* ***C08G 75/0277*** *(2016.01)*
***C08G 75/0286*** *(2016.01)* ***C08G 75/029*** *(2016.01)*
***C08G 75/23*** *(2006.01)* ***C08J 5/00*** *(2006.01)*

(52) Cooperative Patent Classification (CPC):
**C08G 65/48; C08G 75/0277; C08G 75/0286; C08G 75/029; C08G 75/23**

(86) International application number:
**PCT/EP2022/052835**

(87) International publication number:
**WO 2022/167637 (11.08.2022 Gazette 2022/32)**

# (54) PROCESS FOR MODIFYING AN AROMATIC POLYETHER BACKBONE AND A MODIFIED POLYETHER OBTAINED BY THIS PROCESS

VERFAHREN ZUR MODIFIZIERUNG EINES AROMATISCHEN POLYETHERGERÜSTES UND NACH DIESEM VERFAHREN HERGESTELLTER MODIFIZIERTER POLYETHER

PROCÉDÉ DE MODIFICATION D'UN SQUELETTE DE POLYÉTHER AROMATIQUE ET POLYÉTHER MODIFIÉ OBTENU SELON CE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2021 EP 21155741**

(43) Date of publication of application:
**13.12.2023 Bulletin 2023/50**

(73) Proprietor: **Technische Universität Berlin**
**10623 Berlin (DE)**

(72) Inventors:
- **SÜSSMUTH, Roderich**
  **10629 Berlin (DE)**
- **PRISYAZHNOY, Victor**
  **14943 Luckenwalde (DE)**

(74) Representative: **Maikowski & Ninnemann Patentanwälte Partnerschaft mbB**
**Postfach 15 09 20**
**10671 Berlin (DE)**

(56) References cited:
**EP-A1- 2 152 780**
**EP-A1- 2 725 050**
**EP-A1- 3 064 526**
**EP-A2- 3 064 340**
**JP-A- 2004 263 052**
**JP-A- 2005 154 578**
**US-A- 3 733 302**

- **JESSOP, P. G.: "Searching for green solvents", GREEN CHEMISTRY, vol. 13, no. 6, 2011, pages 1391 - 1398**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 288 481 B1

## Description

The present invention relates to a process for modifying / functionalizing a polymer backbone, in particular a polyether polysulfone backbone, and to a modified functionalized polymer obtained in this process. More specifically, the invention relates to an improved, economical, and environmentally friendlier method of chemical modification of a preformed polyether backbone, resulting in a modified polymer with improved consumer properties.

Aromatic polyethers are attractive polymer materials for a range of applications, such as separation membranes, which have been developed for a wide variety of applications, e.g. in separation technology, biological processes, medical devices, and blood purification. In addition, due to superior thermal, chemical, and mechanical properties of aromatic polyethers, they are widely used as filtration membranes, coatings, composites, microelectronic devices, and fuel cells.

The performance of aromatic polyethers in numerous applications relies largely on the combination of bulk (e.g. mechanical) properties together with the aromatic polyether based materials surface properties. However, despite outstanding progress in their synthesis and applications, these materials have limitations associated with mechanical stress, cracking in certain solvents, poor tracking resistance, and weathering properties. The chemical modification of the aromatic polyether backbone not only overcomes these limitations but also extends the range of potential applications of these high-performance materials through the specific properties gained, and thus provides broader scope of applications. Besides, the chemical modification of large-scale produced commodity aromatic polyethers might provide unique opportunities in the fabrication of advanced polymeric materials. In this sense, effective chemical functionalization methodologies are always of great importance in synthetic manipulations with polymer substrates to impart desired properties.

Chemical modification of commercially available aromatic polyethers may be performed by treatments of the polymer by a certain modification (functionalization) reagent or a mixture of such reagents depending on the chemical structure of the polymer backbone or pendant groups. However, treating the aromatic polyether with one known modifying reagent that has previously been used successfully to modify a similar, but still slightly different polymer, can lead to unpredictable results. In other terms, a functionalization reagent that works well for one type of aromatic polyether will not necessarily work successfully for another type of aromatic polyethers, and vice versa. Different approaches for modifying aromatic polyethers and other polymers are described,

For example in EP 2 152 780 A1 methods for increasing the solubility of polymeric materials based on aromatic polyethers in organic solvents for their subsequent processing are described. All chemical changes are carried out on the ketone functionality, which is part of the polymer backbone, but does not affect the C-H bonds of aromatic nuclei, which are also part of the backbone of the polymer.

US 3,733,302 discloses a method for production of trimellitimido alkyl substituted aromatic carbocyclic organic polymers. The process for imidoalkylation of aromatic carbocyclic polymers is performed by incubation of the aromatic carbocyclic polymer, dissolved in an appropriate reaction solvent, imidoalkylation reagents, in the presence of gaseous boron trifluoride.

EP 2725 050 A1 describes a method for producing a poly(phenylene ether ether ketone) by thermal ring opening of a cyclic poly(phenylene ether ether ketone).

Thus, most of the methods that are supposed to be used for the chemical modification of an aromatic polyether backbone require careful selection and optimization of the reaction conditions, solvents, and modification reagents used for to avoid undesirable side reactions that can alter the molecular weight of the aromatic polyether (crosslinking or chain scission), polydispersity, non-uniform functionalization of polymer chains and thus reduce the favorable properties of the desired modified aromatic polyether.

Hence, alternative mild, cost-effective and environmentally safe methods for chemical modification of aromatic polyethers are highly desired.

Chemical modification of relatively low molecular weight compounds usually results in a mixture consisting of the desired modified low molecular weight compound and a number of by-products. The modified substance can be separated from side-products after each step of the chemical modification by using a plurality of well-known separation methods (like crystallization, distillation, chromatography, etc.). However, in the case of the chemical modification of polymers (high molecular substances, consisting of a sequence of many covalently linked low molecular weight repeating units), separation of polymer chains bearing only covalently attached desired functionalities from polymer chains bearing both the covalently attached desired functionality and a certain amount of covalently attached products of side reaction, is practically impossible from the point of view of the separation process costs.

This situation arises, since there are few chemical transformations that either render quantitative yields or are practically free from side reactions, or both. Therefore, in the vast majority of cases, the reaction product of the chemical modification of polymers is one, in which there are different proportions of unchanged repeating units, repeating units bearing the desired functionality, and repeating units bearing some other functionalities resulting from side reactions. Obviously, the ratio of repeating units bearing the newly introduced desired functionality, unchanged repeating units, and repeating units bearing some functionalities resulting from side-reactions will depend on the specific reactions which are

carried out on a given polymer. The most undesirable side-reactions are crosslinking of polymer chains and chain fission reactions, since they lead to the most severe change in the consumer properties of the modified polymer.

Thus, there is a persistent need to develop new processes for large scale chemical modification of polymers, which would consider and minimize the cost of the modification process at the development stage, as well as minimize its negative impact on the environment. This also includes the development of new modifying reagents, new catalysts, as well as the optimization of reaction conditions for the chemical modification of polymers, nullifying the aforementioned disadvantages of existing methods and reagents.

Yet another factor that makes a significant impact on the costs of the modification process is the use of sophisticated equipment. Typically, the need for such equipment arises when using processes requiring heating or cooling the reaction medium during the polymer modification reaction, or when the process is carried out at elevated pressure. For that reason, the development of processes for the modification of polymers occurring under ambient conditions is also in demand.

Another feature of polymer modification is the consumption of significant volumes of solvents at every stage of the polymer modification process. The reasons for this differ for polymers soluble in the reaction medium and polymers insoluble in the reaction medium.

In the case of soluble polymers, this is primarily due to the fact that in the vast majority of cases, the process of precipitation of the modified polymer with a large volume of non-solvent is used to separate the modified polymer from other components of the reaction mixture. As a result, this leads to a significant increase in the cost of the solvent recycling process, since it requires the use of sophisticated specialized equipment for rectification. Also, in most cases, the recovery of solvents from a complex mixture occurs with low efficiency and the formation of a large amount of waste.

There is another important issue that directly affects the cost of the process of chemical modification of polymers, as well as the amount of waste produced by the process. This refers to the aqueous workup of the organic phase to remove the catalyst or water-soluble by-products as well side-products. Being a de facto standard process in the chemical industry, it nevertheless produces a large amount of heavily contaminated waste water, which is expensive to sanitize. In consequence, the development of methods that exclude aqueous workup and thereby reduce the cost of the process is urgent.

In the case of insoluble polymers, after each stage of the chemical modification of the polymer, thorough washing with a solvent is required to remove unreacted modification reagent, catalyst, by-products, and side-products. As in the case of the modification of soluble polymers, the use of a mixture of solvents in the process leads to significant costs for the regeneration of the solvents used in the process of modification. From the cost point of view on the modification process and the minimization of environmental pollution, the use of one (or a maximum of two) solvents, both the reaction medium for polymer modification and for post-modification washes, seems to be the most optimal.

Thus, it is an object of the invention to provide an alternative process of modification (functionalization) of a polyether backbone, which is simplified in terms of time requirements and complexity as compared to previously used methods.

This object is solved by a process comprising the features of claim 1.

Insofar as the term embodiment or aspect or alternative is used in the following, or features are presented as being optional, this should be interpreted in such a way that the only protection sought is that of the invention claimed and defined in the appended claims.

Accordingly, a process for modifying (solely) an aromatic moiety of the aromatic polyether, for obtaining a modified polyether is provided, wherein the process comprises the steps of:

a) providing at least one aromatic polyether to be modified in a dissolved state in an inert organic solvent,
b) adding at least one modification reagent,
c) adding at least one catalyst, wherein the at least one catalyst is a boron trifluoride complex; wherein no gaseous boron trifluoride is used,
d) carrying out the process until a desired degree of functionalization of said aromatic polyether backbone is reached,
e) recovery of the modified aromatic polyether.

In an embodiment of the process, at least two modification reagents, preferably two or three, are added to the polymer solution.

In another embodiment of the present process, at least one catalyst quencher is added prior to step e).

In yet a further embodiment of the present process at least one catalyst scavenger is added prior to step e).

In still another embodiment the reaction solvent is replaced by a workup solvent prior to step e)

According to a preferred embodiment, the process for the production of modified (functionalized) aromatic polyethers by using single modifying reagent comprises the following steps:

(1) providing the polyether in a solvent system adapted to maintain the polymer in a dissolved state;

(2) adding of at least one modification reagent;
(3) adding of an appropriate catalyst to the solution of the step (2), wherein the at least one catalyst is a boron trifluoride complex; wherein no gaseous boron trifluoride is used,
(4) reacting of said modification reagent with the polymer until the reaction is completed;
(5) adding of an appropriate catalyst scavenging reagent to the solution of the step (4);
(6) recovery of the solid scavenged catalyst from the solution of the step (5);
(7) recovery of the modified polymer from the solution of the step (6);

According to another preferred embodiment, the process for the production of modified (functionalized) aromatic polyethers by using single modifying reagent comprises the following steps:

(1) providing the polyether in a solvent system adapted to maintain the polymer in a dissolved state;
(2) adding of at least one modification reagent;
(3) adding of an appropriate catalyst to the solution of the step (2), wherein the at least one catalyst is a boron trifluoride complex; wherein no gaseous boron trifluoride is used,
(4) reacting of said modification reagent with the polymer until the reaction is completed;
(5) adding of an appropriate catalyst quenching reagent to the solution of the step (4);
(6) adding of an appropriate catalyst scavenging reagent to the solution of the step (5);
(7) recovery of the solid scavenged catalyst from the solution of the step (6);
(8) recovery of the modified polymer from the solution of the step (7).

According to a further preferred embodiment, the process for the production of modified (functionalized) aromatic polyethers by using mixture of modifying reagents comprises the following steps:

(1) providing the polyether in a solvent system adapted to maintain the polymer in a dissolved state;
(2) adding a first modification reagent;
(3) adding of a second (third, fourth, etc.) modification reagent;
(4) adding of an appropriate catalyst to the solution of the step (3), wherein the at least one catalyst is a boron trifluoride complex; wherein no gaseous boron trifluoride is used,
(5) reacting of said modification reagents with the polymer until the reaction is completed;
(6) adding of an appropriate catalyst scavenging reagent to the solution of the step (5);
(7) recovery of the solid scavenged catalyst from the solution of the step (6);
(8) recovery of the modified polymer from the solution of the step (7);

According to a yet further preferred embodiment, the process for the production of modified (functionalized) aromatic polyethers by using mixture of modifying reagents comprises the following steps:

(1) providing the polyether in a solvent system adapted to maintain the polymer in a dissolved state;
(2) adding a first modification reagent;
(3) adding of a second (third, fourth, etc.) modification reagent;
(4) adding of an appropriate catalyst to the solution of the step (3), wherein the at least one catalyst is a boron trifluoride complex; wherein no gaseous boron trifluoride is used,
(5) reacting of said modification reagents with the polymer until the reaction is completed;
(6) adding of an appropriate catalyst quenching reagent to the solution of the step (5);
(7) adding of an appropriate catalyst scavenging reagent to the solution of the step (6);
(8) recovery of the solid scavenged catalyst from the solution of the step (7);
(9) recovery of the modified polymer from the solution of the step (8).

According to a still another preferred embodiment, the process for the production of modified (functionalized) aromatic polyethers by using mixture of modifying reagents comprises the following steps:

(1) providing the polyether in a solvent system adapted to maintain the polymer in a dissolved state;
(2) adding a first modification reagent;
(3) adding of a second (third, fourth, etc.) modification reagent;
(4) adding of an appropriate catalyst to the solution of the step (3), wherein the at least one catalyst is a boron trifluoride complex; wherein no gaseous boron trifluoride is used,
(5) reacting of said modification reagents with the polymer until the reaction is completed;
(6) adding of an appropriate catalyst quenching reagent to the solution of the step (5);

(7) adding of an appropriate catalyst scavenging reagent to the solution of the step (6);
(8) recovery of the solid scavenged catalyst from the solution of the step (7);
(9) exchange the reaction solvent with a workup solvent from the solution of the step (8);
(10) recovery of the modified polymer from the solution of the step (9).

According to the invention, the polyether to be modified comprises one of the following repeating units:

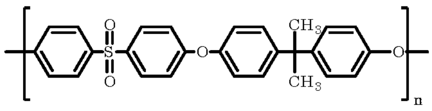 ; 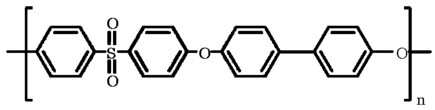

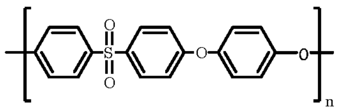 ; 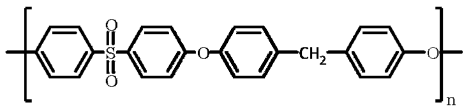 ,

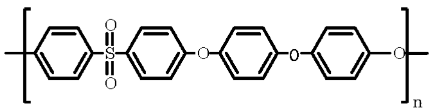 , 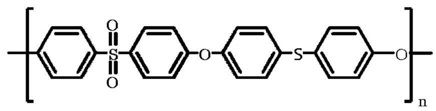 ,

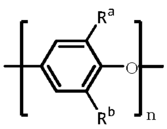 ,

wherein $R^a$ and $R^b$ represent substituents on the benzene ring and each independently comprises alkyl, -aryl, or -arylene-alkyl;

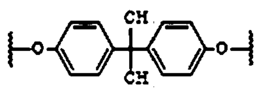

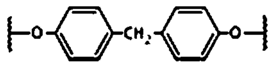

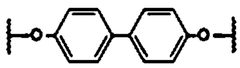

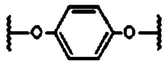

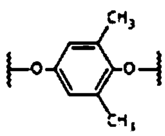 .

Polyether structures comprising at least one sulfonyldibenzene unit are of particular interest. Such structures polysulfone structures (PSU) may comprise bisphenol A and sulfonyldibenzene (diphenylsulfone) as repeating units, which are linked by a phenolic ether as a functional group:

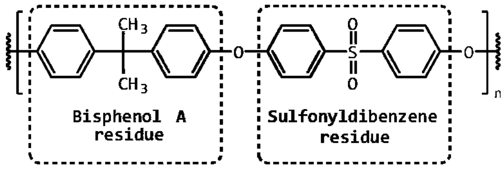

As mentioned above, the present method allows for a modification of the aromatic moiety of the polyether structures. Thus, any functionality linking the aromatic rings, such as a sulfon or ether functionality, is not affected.

Temperature

When carrying out the process of the present invention, the reaction temperatures can be varied over a fairly wide range. In general, the reaction is carried out at temperatures between -20°C and 200°C, preferably at temperatures between 0°C and 100°C, most preferably at temperatures between 15°C and 45°C.

Pressure

The process according to the present invention is in general carried out at atmospheric pressure. However, alternatively it can also be carried out under super-atmospheric or reduced pressure.

Solvents

As mentioned above, the process according to the present invention is preferably carried out in the presence of a diluent or solvent.

Suitable diluents for carrying out the process of the present invention are any common organic solvents which are inert under the reaction conditions, provide dissolving of an aromatic polyether to be modified, provide solubility to the modifying reagent, provide solubility to the catalyst and having a boiling point at least as high as the temperature of reaction. Any suitable amount of suitable solvent may be used.

By "inert under the reaction conditions" is meant an organic solvent that, under the conditions of aromatic polyether modification, does not appreciably react either with the aromatic polyether to be modified, modification reagent, and catalyst or with the resulting modified aromatic polyether.

The preferred inert solvents of the present invention are inert solvents, such as halogenated hydrocarbons, halogenated aromatics, nitroalkanes and nitroaromatics. Non-limiting examples are dichloromethane, 1,2-dichloroethane, chloroform, carbon tetrachloride, nitromethane, nitroethane, nitropropane, nitrobenzene, nitrotoluenes or mixtures of the solvents mentioned. Such inert solvents are well-known to those skilled in the art.

The most preferred inert solvents of the present invention are dichloromethane, 1,2-dichloroethane, chlorobenzene, 1,2-dichlorobenzene or mixtures of thereof.

Solvent recycling

Chemical modification of aromatic polyethers has a number of specific process features, having a strong influence on the cost of the modification process.

Almost all the processes of chemical modification of high molecular weight polymeric materials have a serious drawback in terms of the process sustainability, namely that they consume large volumes of solvents. In the vast majority of cases, this is because it is common practice to recover the polymer from the solution by precipitation using a non-solvent, which is mixed with the solvent in which the polymer is dissolved. This recovery process is used to obtain the polymer that is free from low molecular mass substances like unreacted modification reagent, the reaction by-products and/or side-products. For effective precipitation of the polymer from the solution in a form convenient for further use, an average of 10-20 volumes of non-solvent is required. The precipitation process should be repeated at least once or twice for the effective removal of occluded (adsorbed or physically trapped) low molecular weight impurities. Considering the fact that with an increase in the polymer concentration, the viscosity of its solution increases significantly, the practical range of polymer concentrations that is still suitable for various technological operations (like agitation, pumping) is in the range of 10-20% (w/v), in some cases 30% (w/v). Given the concentration limitations of polymers in the solution, the relative volumes of non-solvents, calculated per unit mass of the polymer being treated, become even greater than indicated above.

For example, to precipitate 1 kg of a modified aromatic polyether from its 20% (w / v) solution in a specific solvent (5 liters), 10 volumes of non-solvent (50 liters) are required. Repeating the precipitation operation to obtain a purer polymer

will require the use of an additional 5 liters of solvent and 50 liters of non-solvent. Thus, the purification of 1 kilogram of the modified aromatic polyether by double precipitation using a non-solvent requires the use of at least 10 liters of solvent and 100 liters of non-solvent respectively. In this regard, polymer workup after its chemical modification requires using solvents that facilitate sustainable chemical processing.

Taking into account all of the above facts, the method of the present invention assumes the maximum possible use of the regeneration and recycling of both the reaction solvent and the mixture of solvents (the reaction solvent and a precipitating non-solvent, or a workup solvent and a precipitating non-solvent) for the subsequent recovery of the modified polymer. Such an approach allows maintaining an economical process via minimization of overall raw material cost.

The recycling of the reaction solvent, which is used as a reaction medium for carrying out the process of chemical modification of the polymer, is especially important since its quality is a critical parameter for the successful implementation of the process of chemical modification of the polymer.

As well, the need to regenerate (recovered from a reaction medium and recycled) the reaction solvent is associated with the fact that aromatic polyethers are soluble in a limited range of solvents and these solvents must also meet the requirements for the conditions of the reaction of chemical modification (i.e. reaction solvent should be inert under the reaction conditions).

The overall efficiency of the solvent regeneration primarily depends on the absence of other volatile components in the reaction medium at the time when recovery of said reaction solvent from the reaction medium starts. For this purpose, the present invention provides a method for removing a volatile reaction catalyst from a reaction medium using catalyst quencher, or catalyst scavenger, or both of them. After such treatments, the reaction solvent can be easily recovered from the post-modification reaction medium by simple distillation and directed to the recycling step.

Therefore, it is justifiable, from the point of view of the process sustainability, to use different solvents at certain stages of the process of chemical modification of the polymers. One solvent, more suitable for the criteria of the polymer modification reaction, followed by its replacement with another solvent, which is more suitable for the stage of modified polymer recovery from the reaction medium and its subsequent purification. On the one hand, this approach allows the use of more expensive or even highly regulated solvents as reaction solvent in an on-site closed-loop process by its recycling and reuse in the same process. On the other hand, this approach can also greatly simplify and reduce the cost of recycling individual solvents from a binary mixture resulting from the process of isolation and purification of modified polymers. This is achieved because at the early stages of the process development, the use of solvents that form difficult-to-separate binary azeotropic mixtures can be avoided, which significantly reduces the cost of the disposal process. The term "solvent recycling" or "solvent recovery" means distillation or other physico-chemical treatment resulting in a recycled solvent suitable for reuse.

To select a suitable pair of solvents required for purification of the modified aromatic polyether by precipitation in a non-solvent, which is miscible with the solvent hat used to dissolve the polymer, in the current literature a number of guides are available (Byrne, 2016). In general, any solvent selection guides should consider three criteria: energy to manufacture, cumulative energy demand (CED), and impact on health and safety (Jessop, 2011, Searching for green solvents. Green Chemistry, 13(6), 1391-1398). Although these features are undoubtedly crucial, a little indication is typically given regarding the proficiency of the solvent's principal function to act as a medium for a synthetic transformation, namely, as a solvent for carrying out the polymer modification reaction, that is a critical aspect that is very hard to anticipate a priori; Byrne, F. P., Jin, S., Paggiola, G., Petchey, T. H., Clark, J. H., Farmer, T. J., & Sherwood, J. (2016). Tools and techniques for solvent selection: green solvent selection guides. Sustainable Chemical Processes, 4(1), 7; Jessop, P. G. (2011). Searching for green solvents. Green Chemistry, 13(6), 1391-1398.

<u>Catalysts</u>

The process according to the present invention is carried out in the presence of boron trifluoride complexes as catalysts. Boron trifluoride has several advantages over catalysts of similar type. One of such advantages is the ability to form coordination compounds with most varied inorganic and organic substances that contain elements capable of exhibiting their highest valency or carbon atoms with double or triple bonds. Many of these coordination compounds of boron trifluoride possess high stability, some solid complexes can be even recrystallized from solvents, and some liquid coordination compounds of boron trifluoride can be distilled without decomposition in vacuum or even at atmospheric pressure. Many of these boron trifluoride coordination compounds surpass free boron trifluoride in their catalytic activity and are therefore used as independent catalyst. In some processes such complexes serve as a convenient form of using boron trifluoride as a catalyst.

Modulation of the catalytic activity of boron trifluoride by complexation is largely determined by the need to prevent the occurrence of side processes leading to cross-linking of polymer chains. The formation of cross-links leads to the loss of the unique properties of the polymer (including the ability to form membranes for filtration, ultrafiltration or conducting membranes for fuel cells).

Also, the use of preformed boron trifluoride coordination compounds as catalysts circumvents the problem of

dosing gaseous boron trifluoride into a reaction mixture. It is well known to those skilled in the art that the use of boron trifluoride in the gaseous state requires particular equipment for an accurate dosing. Likewise, it is a well-known fact that during addition of gaseous boron trifluoride into a reaction mixture, it is technically challenging to control the temperature of the reaction mixture. Overheating of the reaction mixture is a significant problem which can lead to formation of a large amount of non-uniformly modified polymer and there is always the possibility that the reaction could become uncontrollable.

The use of gaseous boron trifluoride leads to a side reaction associated with the formation of a dimer of the modifying reagent with the simultaneous releasing of a formaldehyde molecule. The resulting formaldehyde, which is a symmetrical bifunctional cross-linking agent, causes the formation of cross-links between the polymer chains. This leads to a sharp increase in the viscosity of the reaction mixture (during dimerization, the polymer chain length simultaneously doubles), which strongly affects the mass transfer in the reaction mixture and, in turn, leads to the formation of local areas of overheating (hot-spots).

In areas of overheating, the reaction rate increases significantly (both, for the desired reaction and the side-reaction), which leads to a non-uniform distribution of the modified repeating monomer units along the length of the polymer chain. The use of preformed boron trifluoride complexes makes it possible to avoid undesirable side reaction processes.

The present process for the chemical modification of aromatic polyethers is environmentally friendly and cost-effective (sustainable). The process sustainability is largely determined by the fact no gaseous boron trifluoride is used as a catalyst for the process of chemical modification of polymers, since processes with its participation have a number of permanent shortcomings. Thus, the use of gaseous boron trifluoride is explicitly exempt in the present case.

In addition, boron trifluoride coordination compounds are often formed as intermediate products in reactions that are catalyzed by boron trifluoride and such transition complexes play an important role in the activation or deactivation of boron trifluoride as the catalyst.

Yet another advantage of boron trifluoride is the possibility of its recovery in many cases from the reaction mixture in form of solid boron trifluoride coordination compounds followed by subsequent regeneration and reuse of boron trifluoride.

An additional advantage of boron trifluoride is the absence of the need to use anhydrous reaction conditions. This is mainly due to the fact that the reaction of boron trifluoride with water is a complex process. Unlike other boron halides, hydrolysis of boron trifluoride is very slow due to the property of boron trifluoride that it can produce stable complexes with water containing one or two equivalents of water per one boron trifluoride molecule when the molar ratios of boron trifluoride / water are 1:1 and 1:2, respectively. Compared to ethyl ether, the interaction of water with boron trifluoride is comparatively stronger, and the ligand exchange and rearrangement between boron trifluoride diethyl ether complex and water has been observed. The dihydrate complex is very stable, less fuming than the monohydrate and its acidity is close to that of 100% nitric acid. On the other hand, the monohydrate complex is a strong acidic system with the acidity close to that of 100% sulfuric acid.

Boron trifluoride complexes are well-known to those skilled in the art and are described, for example, in: Maria, P. C., & Gal, J. F. (1985). A Lewis basicity scale for nonprotogenic solvents: enthalpies of complex formation with boron trifluoride in dichloromethane. The Journal of Physical Chemistry, 89(7), 1296-1304; Greenwood, N. N., & Martin, R. L. (1954). Boron trifluoride co-ordination compounds. Quarterly Reviews, Chemical Society, 8(1), 1-39; Topchiev, A. V., Zavgorodnii, S. V., & Paushkin, Y. M. (1959). Boron Fluoride and Its Compounds as Catalysts in Organic Chemistry: International Series of Monographs on Organic Chemistry (Vol. 2). Pergamon Press and references cited therein.

Non-limiting examples of boron trifluoride complexes include complexes of boron trifuoride with: ethers (dimethyl ether, diethyl ether, di-n-butyl ether, tetrahydrofuran, dioxane, etc.), esters (ethyl acetate, isopropyl acetate, methyl benzoate, ethyl benzoate, dimethyl succinate, methyl p-toluate, etc.), alcohols (methanol, ethanol, n-butanol, 2,2,2-trifluoroethanol, 1,1,1,3,3,3-hexafluoro-2-propanol, etc.), chloroalkanes (dichloromethane, 1,2-dichloroethane, etc.), nitroalkanes (nitromethane, nitroethane, 1-nitropropane, etc.), haloaromatics (chlorobenzene, chlorotoluene, bromobenzene, fluorobenzene, 1,2-difluorbenzene, hexafluorobenzene, alpha,alpha,alpha-trifluorotoluene, etc.), nitroaromatics (nitrobenzene, nitrotoluene, etc.), nitriles (acetonitrile, propionitrile, isobutyronitrile, benzonitrile, etc.), carboxylic acids (acetic acid, propionic acid, pivalic acid, benzoic acid, malonic acid, succinic acid, etc.), sulfonic acids (methanesulfonic acid, benzenesufonic acid, p-toluenesulfonic acid, trifluoromethanesulfonic acid, etc.), water (monohydrate, dihydrate), sulfones (tetramethylene sulfone, dimethyl sulfone, diethyl sulfone, etc.), sulfoxides (dimethyl sulfoxide, diethyl sulfoxide, etc.), thioethers (methyl sulfide, ethyl sulfide, propyl sulfide, isopropyl sulfide, tetrahydrothiophene), mineral acids (phosphoric acid, sulfuric acid, etc.) any derivative thereof, and any combination thereof.

In an embodiment boron trifluoride complexes based on ethers, preferably dimethyl ether, diethyl ether, di-n-butyl ether, tetrahydrofuran, dioxane; esters, preferably ethyl acetate, isopropyl acetate, methyl benzoate, ethyl benzoate, dimethyl succinate, methyl p-toluate; carboxylic acids, preferably acetic acid, propionic acid, pivalic acid, benzoic acid, malonic acid, succinic acid are used.

Commercially available boron trifluoride complexes like boron trifluoride diethyl etherate and boron trifluoride

acetic acid complex being particularly preferred.

Preferably, 0.1-20.0 mol, more preferably 0.5 to 6.0 mol, particularly preferably 1.0 to 4.0 mol of boron trifluoride complex in relation to the amount of aromatic polyethers modifying reagents are used. Preferably no further acid, in particular no further Bronsted acid such as trifluoroacetic acid is required.

Catalyst quenchers

According to the present invention, upon aromatic polyether modification completion (when the required degree of modification is reached) a catalyst quencher may be optionally added to the reaction mixture. It is well-known to those skilled in the art that boron trifluoride often forms complexes with the reaction product, which is thermodynamically or kinetically more stable than the boron trifluoride complex that used as catalyst in the process of the present invention.

The addition of the catalyst quencher decomposes this type of complexes, transferring all boron trifluoride into the liquid phase, thereby significantly reducing the amount of non-solvents for recovery of the modified aromatic polyether by precipitation. Thus, reducing the amount of solvent required for the post-modification processing of the modified aromatic polyether significantly reduces the cost of the process and makes it more economical.

Non-limiting examples of boron trifluoride quenchers include alkyl phosphates (trimethyl phosphate, triethyl phosphate, tributyl phosphate, etc.), carboxylic acid amides (dimethyl formamide, dimethyl acetamide, N-methyl pyrrolidone, N-butyl pyrrolidone, etc.), ureas (dimethylethylene urea, tetramethyl urea, 1,3-dimethyl-2-imidazolidinone, 1,3-dimethyl-3,4,5,6-tetrahydro-2(1H)-pyrimidinone, etc.), carboxylic acids (acetic acid, propionic acid, pivalic acid, benzoic acid, dicarboxylic and tricarboxylic acids (e.g. malonic acid, succinic acid, citric acid, etc.), any derivative thereof, and any combination thereof.

Preferably, 0.5-20.0 mol, more preferably 1 to 10.0 mol, particularly preferably 2.0 to 8.0 mol of catalyst quencher in relation to the amount of the boron trifluoride complex are used.

Commercially available alkyl phosphates like trimethyl phosphate, triethyl phosphate, tributyl phosphate or ureas like dimethylethylene urea, tetramethyl urea, 1,3-dimethyl-2-imidazolidinone, 1,3-dimethyl-3,4,5,6-tetrahydro-2(1H)-pyrimidinone being particularly preferred.

Catalyst scavengers

The process according to the present invention discloses reagents and methods related to efficient and environmentally sound recycling of spent homogeneous catalysts used in. It is generally known that there are three of the major environmental problems in the chemical industry comprising: (1) solvent-laden waste, (2) catalyst-containing waste, and (3) waste produced from side reactions.

It is among the objects of this invention to provide a simple and practical method of recovery and recycling of the spent homogeneous boron trifluoride catalyst using appropriate work-up conditions is disclosed here.

The recovery of the spent catalyst becomes particularly relevant especially in the case, if a homogeneous catalyst is used in the process of modification, which cannot be separated from the reaction medium by simple separation methods, such as filtration, centrifugation or distillation. As indicated above, after the completion of the aromatic polyether modification reaction, the catalyst can be in the liquid phase both in the form of a complex initially added to the reaction mixture or in the form of a complex with a quencher.

During the post-modification processing (recovery of the modified aromatic polyether by precipitations by non-solvent), a large amount of waste solvent or solvents mixture is accumulated. The waste contains both, boron trifluoride complexes and side- and by-products. Thus, the recovery and regeneration of the spent catalyst and solvent recycling from this mixture becomes especially relevant both from the point of view of the economic feasibility of the process, and from the point of view of environmental protection.

According to the process of the present invention, recovery of the spent catalyst from liquid spent waste is performed by contacting of said waste with solid catalyst scavenger during appropriate time frame and subsequent separation solid and liquid phases by appropriate separation method. The solid recovered of filtration is a complex of boron trifluoride with a scavenger and can be subsequently used for the regeneration of boron trifluoride.

Boron trifluoride scavenger comprises at least one compound selected from the group consisting of solid coordination compounds of boron trifluoride with inorganic compounds. Non-limiting examples of such boron trifluoride scavengers are hydrofluoric acid salts (ammonium fluoride, lithium fluoride, sodium fluoride, potassium fluoride, cesium fluoride, rubidium fluoride, magnesium fluoride, calcium fluoride, strontium fluoride, barium fluoride, etc.), sulfuric acid salts (sodium sulfate, potassium sulfate, etc.), phosphoric acid salts (trisodium phosphate, tripotassium phosphate, etc.), pyrophosphoric acid salts (sodium pyrophosphate, potassium pyrophosphate, etc.), .), any derivative thereof, and any combination thereof.

Preferably, 1-20.0 mol, more preferably 2 to 10.0 mol, particularly preferably 3.0 to 6.0 mol of catalyst scavenger in relation to the boron trifluoride complex are used.

Commercially available hydrofluoric acid salts (preferably ammonium fluoride, lithium fluoride, sodium fluoride, potassium fluoride, cesium fluoride, rubidium fluoride, magnesium fluoride, calcium fluoride, strontium fluoride, barium fluoride), or phosphoric acid salts (preferably trisodium phosphate, tripotassium phosphate) being particularly preferred.

Such solid coordination compounds of boron trifluoride with inorganic compounds are well-known to those skilled in the art and are described, for example, in: Greenwood, N. N., & Martin, R. L. (1954). Boron trifluoride co-ordination compounds. Quarterly Reviews, Chemical Society, 8(1), 1-39; Topchiev, A. V., Zavgorodnii, S. V., & Paushkin, Y. M. (1959); Boron Fluoride and Its Compounds as Catalysts in Organic Chemistry: International Series of Monographs on Organic Chemistry (Vol. 2). Pergamon Press; Maria, P. C., & Gal, J. F. (1985). A Lewis basicity scale for nonprotogenic solvents: enthalpies of complex formation with boron trifluoride in dichloromethane. The Journal of Physical Chemistry, 89(7), 1296-1304 and references cited therein.

In a more specific embodiment a process for post-condensation modification of a polymer backbone, in particular a polysulfone backbone with negligible formation of undesired crosslinks is provided, wherein the process (method) includes the following steps:

a) providing the polymer in a solvent system adapted to maintain the polymer in a dissolved state;
b) adding of one or more modifying agents, for example at least two modifying agents, in form of electrophilic acylamidomethylation reagent(s); to the polymer solution;
c) adding an appropriate catalyst, corresponding to a boron trifluoride complex thereof or mixtures of different boron trifluoride complexes, to the solution of step b);
d) reacting of said modifying reagent(s) with the polymer, in particular preformed polysulfone until the reaction is completed;
d2) adding a catalyst-scavenging reagent, which is reacted with boron trifluoride complex(s) resulting in formation of an insoluble solid complex;
d3) recovery of the insoluble catalyst complex by filtration;
e) recovery of the modified polysulfone using non-aqueous precipitation media and subsequent filtration;

According to present invention the at least one modifying reagent, in particular an electrophilic acylamidomethylation reagent, is selected from a group of compounds of the general structure **1** (**GS1**):

**Fn-Sp-Lg** (**GS1**)

wherein **Fn** is functional moiety selected from structures of General formula 1 (GF1), or General formula 2 (GF2), or General formula 3 (GF3), or General formula 4 (GF4), or General formula 5 (GF5):

**General formula 1 (GF1)**

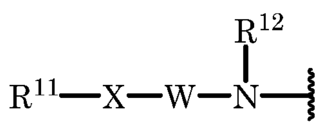

**GF1**

**General formula 2 (GF2)**

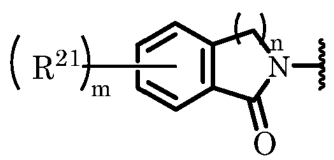

**GF2**

**General formula 3 (GF3)**

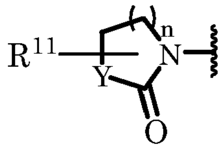

GF3

**General formula 4 (GF4)**

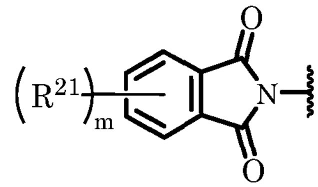

GF4

**General formula 5 (GF5)**

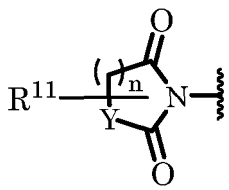

GF5

wherein **Sp** is spacing moiety selected from structure of General formula 6 (GF6):

**General formula 6 (GF6)**

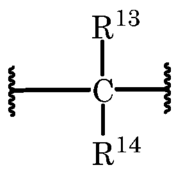

GF6

wherein **Lg** is leaving group moiety selected from structures of General formula 7 (**GF7**), or General formula 8 (**GF8**), or General formula 9 (**GF9**), or General formula 10 (**GF10**), or General formula 5 (**GF5**):

**General formula 7 (GF7)**

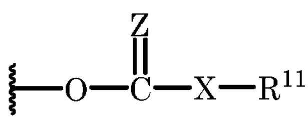

GF7

**General formula 8 (GF8)**

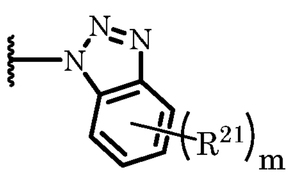

GF8

## General formula 9 (GF9)

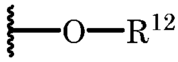

**GF9**

## General formula 10 (GF10)

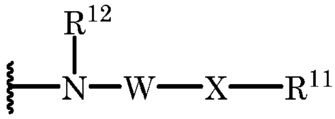

**GF10**

in which:

**W** comprises **-CO-** (carbonyl) or **-$SO_2$-** (sulfonyl) group;
**X** comprises **-$NR^{111}$-** ($R^{111}$ selected from hydrogen or the group consisting of lower alkyl ($C_1$ - $C_{10}$), **-O-** (oxygen), or direct bond;
**$R^{11}$** - comprises (selected from) alkyl, heteroalkyl, -aryl, -arylene-alkyl, -alkylene-aryl, or - alkylene-arylene-alkyl (optionally substituted);
**$R^{12}$** - comprises hydrogen or the group consisting of lower alkyl ($C_1$ - $C_{10}$);
**Y** comprises -$NR^{111}$-, -O- (oxygen), or methylene group (optionally substituted);
**n** represents an integer of 1 to 4;
**$R^{13}$** and **$R^{14}$** independently each other comprises hydrogen, COOH, $COOR^{111}$, $CON(R^{111})_2$, or the group consisting of lower alkyl ($C_1$ - $C_{10}$);
**$R^{21}$** - represents a substituent on the benzene ring and each independently comprises halo group, cyano group, trifluoromethylsulfonyl group, nitro group, trihalomethyl group, keto group, formyl group, carboxyl group, alkoxycarbonyl group, aminocarbonyl group, sulfonyl group, sulfonamide group; and **m** represents an integer of 0 to 4;
**Z** comprises **NH** or **O** (oxygen);

More preferably:

**W** comprises **-CO-** (carbonyl);
**X** comprises **-O-** (oxygen), or direct bond;
**$R^{11}$** - comprises alkyl, heteroalkyl, -aryl or -arylene-alkyl groups (optionally substituted);
**$R^{12}$** - comprises hydrogen or $CH_3$ group;
**Y** comprises **-O-** (oxygen), or methylene group (optionally substituted);
**n** represents an integer of 1 to 3;
**$R^{13}$** and **$R^{14}$** independently each other comprises hydrogen, COOH, $COOCH_3$, $COOCH_2CH_3$, $CON(CH_3)_2$, or CH3 group;
**$R^{21}$** - represents a substituent on the benzene ring and each independently comprises halo group; and m represents an integer of 0 to 1;
**Z** comprises **O** (oxygen);

Particular embodiments for the most preferable modifying reagents used in the present process are illustrated in the following.

The most preferred structures of the general formula 1 (GF1):

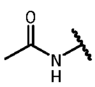
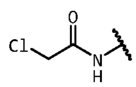
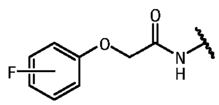
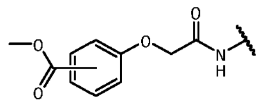

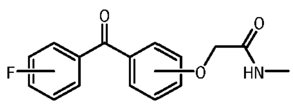
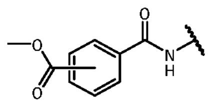
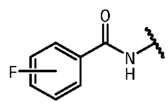

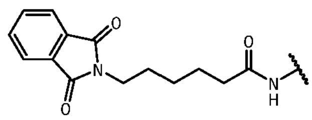 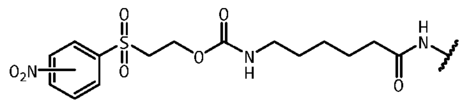

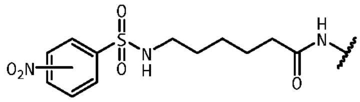 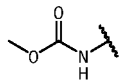 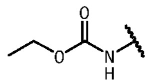

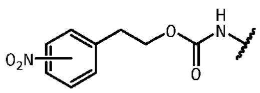 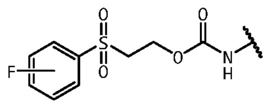 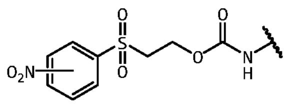

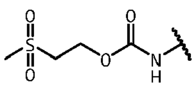 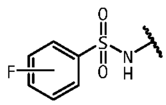 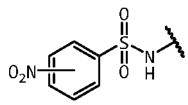 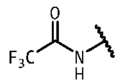

The most preferred structures of the general formula 2 (GF2):

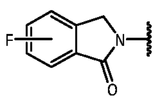 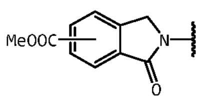 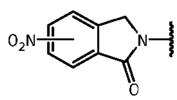

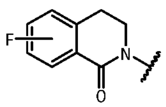 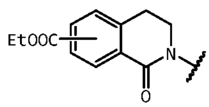 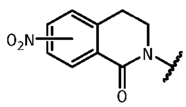

The most preferred structures of the general formula 3 (GF3):

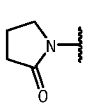 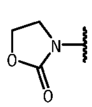 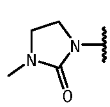 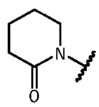

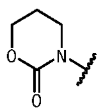 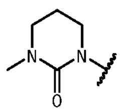 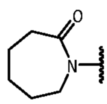 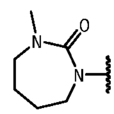

The most preferred structures of the general formula 4 (GF4):

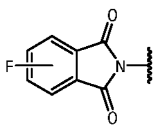 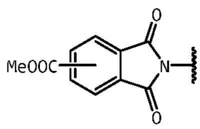 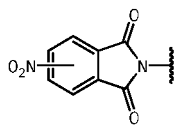

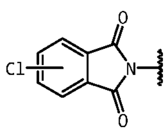 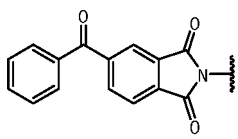 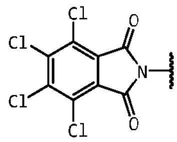

The most preferred structures of the general formula 5 (GF5):

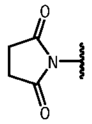 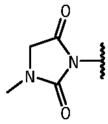 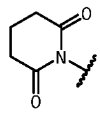

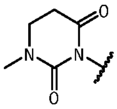 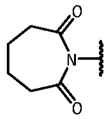 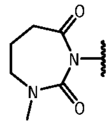

The most preferred structures of the general formula 6 (GF6):

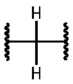 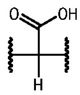 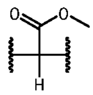 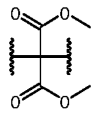

The most preferred structures of the general formula 7 (GF7):

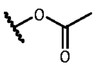 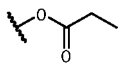 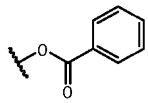

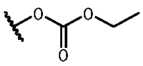 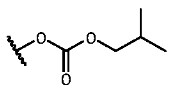 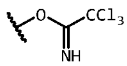

The most preferred structures of the general formula 8 (GF8):

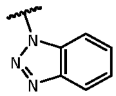 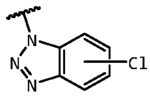 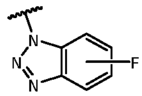

The most preferred structures of the general formula 9 (GF9):

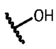 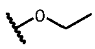 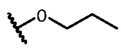 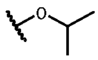

The most preferred structures of the general formula 10 (GF10):

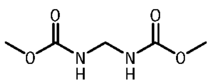 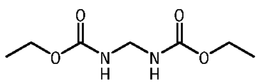 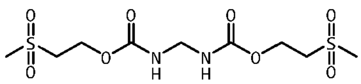

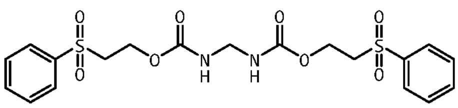 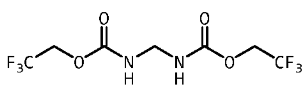

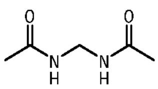 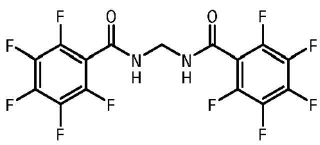 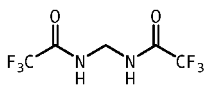

Accordingly, in one embodiment the present process provides modified polyethers, wherein at least one of the aromatic moieties in the polyether backbone is modified with at least one (**Fn1**) of the following groups having one of the general formulas 1, 2, 3, 4, or 5 (**GF1**, **GF2, GF3, GF4,** or **GF5**) covalently attached to the backbone via spacing moiety (**Sp**)

of general formula 6 (**GF6**).

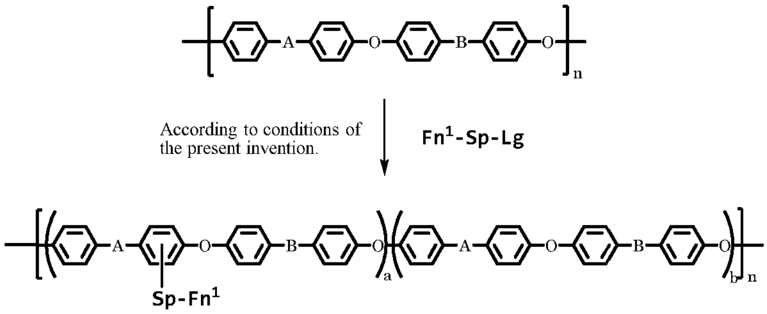


wherein

**A** is selected from $-CH_2-$, $-C(CH_3)_2-$, or -O-,
**B** is selected from -CO-- or $-SO_2-$,
**n** is an integer in a range from 2 to about 3000;
**a** is an integer from 0 to (n-1); b is an integer from 1 to n in proviso with (a+b)=n;
**Fn, Sp,** and **Lg** have the meanings as defined above.

According to another embodiment, the present invention provides modified polyethers under the same operational conditions (single-step modification reaction), wherein at least one of the aromatic moieties in the polyether backbone is modified with at least one (**$Fn^1$**) of the following groups having one of the general formulas 1, 2, 3, 4, or 5 **(GF1, GF2, GF3, GF4,** or **GF5)** covalently attached to the backbone via spacing moiety (**Sp**) of general formula 6 (**GF6**) and, at the same time, at least one more aromatic moiety of the same polyether backbone is modified at least one another group **($Fn^2$)** of the general formulas 1, 2, 3, 4 or 5 **(GF1, GF2, GF3, GF4** or **GF5),** covalently attached to the backbone via spacing moiety (**Sp**) of general formula 6 (**GF6**) with the proviso that second group (**$Fn^2$**) is not equal to the first group (**$Fn^1$**).

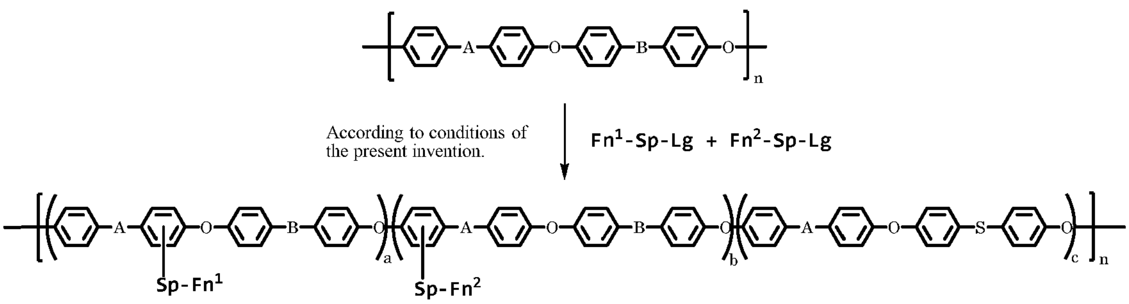


wherein

**A** is selected from $-CH_2-$, $-C(CH_3)_2-$, or -O-,
**B** is selected from -CO-- or $-SO_2-$,
**n** is an integer in a range from 2 to about 3000;
**a** is an integer from 0 to (n-1); **b** is an integer from 1 to n; c is an integer from 1 to n in proviso with (a+b+c)=n;
**Fn, Sp,** and **Lg** have the meanings as defined above.
**$Fn^1$** and **$Fn^2$** are independently selected from one of the following groups of general formulas 1, 2, 3, 4, or 5 (GF1, GF2, GF3, GF4, or GF5) each having the meanings as defined above. **Sp,** and **Lg** also have the meanings as defined above with the proviso that **$Fn^1$** is not equal to **$Fn^2$**.

According to yet another embodiment, the present invention provides modified polyethers in which under the same operational conditions (single-step modification reaction) incorporated more than two different functionalities according to statements, specified in the previous embodiment.

Definitions

As used herein, the term of **"polysulfone"** (PSF or PSU) specifically indicates the polymers carrying para-linked

diphenylsulfone (sulfonyldibenzene) and 4,4'-isopropylidenediphenol.

The term **"repeating unit"** denotes an elementary structural unit, which periodically repeats itself along the polymeric chain. Whenever the polymerization or polycondensation reaction requires the alternate combination of two different monomers, the repeating unit is formed by two monomeric units.

The term **"degree of substitution"** is defined as the average number of aromatic C-H groups substituted per repeating unit of the polysulfone backbone. The maximum number of C-H groups per repeating unit is 8 ("eight") and therefore the theoretical maximum degree of substitution is also 8 ("eight") in the case of monofunctional substituents.

The term **"inert organic solvent"** as used herein means an organic solvent for polysulfone, which does not enter into reaction with the reactants or adversely affect the desired course of the reaction.

The terms **"electron-withdrawing group", "electron-deficient group"** and **"electron-poor group"** are recognized in the art and as used herein refer to a functionality which draws electrons to itself more than a hydrogen atom would do at the same position. Examples of electron-withdrawing groups include carbonyl groups (e.g., ketone, esters, aldehydes), sulfonyl, fluoro, trifluoromethyl, nitro, cyano, and functional groups alike.

The term **"arene"** refers to an aromatic hydrocarbon molecule. For certain implementations, an arene can include from 5 to 100 carbon atoms. The term "lower arene" refers to an arene that includes from 5 to 20 carbon atoms, such as from 5 to 14 carbon atoms, while the term "upper arene" refers to an arene that includes more than 20 carbon atoms, such as from 21 to 100 carbon atoms. The term "monocyclic arene" refers to an arene that includes a single aromatic ring structure, while the term "polycyclic arene" refers to an arene that includes more than one aromatic ring structure, such as two or more aromatic ring structures that are bonded via a carbon-carbon bond or that are fused together. The term "heteroarene" refers to an arene that has a set of its carbon atoms replaced by a set of heteroatoms, such as N, Si, S, O, and P. The term "substituted arene" refers to an arene that has a set of its hydrogen atoms replaced by a set of substituent groups, while the term "unsubstituted arene" refers to an arene that lacks such replacement. Combinations of the above terms can be used to refer to an arene having a combination of characteristics. For example, the term "monocyclic lower alkene" can be used to refer to an arene that includes from 5 to 20 carbon atoms and a single aromatic ring structure.

The term **"substituted"** means that an atom or group of atoms formally replaces hydrogen as a "substituent" attached to another group. For aryl and heteroaryl groups, the term "substituted", unless otherwise indicated, refers to any level of substitution, namely mono, di, tri, tetra, or penta substitution, where such substitution is permitted. The substituents are independently selected, and substitution may be at any chemically accessible position.

As used herein and unless otherwise indicated, the term **"alkyl"** includes saturated monovalent linear, branched, and cyclic hydrocarbon radicals. An alkyl group can include one or more double or triple bonds. It is understood that cyclic alkyl groups comprise at least three carbon atoms.

As used herein and unless otherwise indicated, the term **"heteroalkyl"** means branched or linear alkyl having from 1 to 8, more preferably from 1 to 4 carbon atoms and including at least one heteroatom, including N, P, O, or S. Examples include, but are not limited to, compounds of the formula:

The term **"optionally substituted"** refers to the presence or lack of a substituent on the functional group being defined. When substitution is present the group may be mono-, di- or tri-substituted, independently, with alkyl, lower-alkyl, cycloalkyl, hydroxyl lower-alkyl, amino lower-alkyl, hydroxyl, thiol, amino, halo, nitro, lower-alkylthio, lower-alkoxy, mono-lower-alkylamino, di-lower-alkylamino, acyl, hydroxycarbonyl, lower-alkoxycarbonyl, hydroxysulfonyl, lower-alkoxysulfonyl, lower-alkylsulfonyl, lower-alkylsulfinyl, trifluoromethyl, cyano, tetrazoyl, carbamoyl, lower-alkylcarbamoyl, and di-lower-alkylcarbamoyl. Typically, electron-donating substituents such as alkyl, lower-alkyl, cycloalkyl, hydroxylower-alkyl, aminolower-alkyl, hydroxyl, thiol, amino, halo, lower-alkylthio, lower-alkoxy, mono-lower-alkylamino and di-lower-alkylamino are preferred.

The term **"leaving group"** means a group capable of being displaced by a nucleophile in a chemical reaction, for example halo, nitrophenoxy, pentafluorophenoxy, alkyl sulfonates (e.g., methanesulfonate), aryl sulfonates, phosphates, sulfonic acid, sulfonic acid salts, and alike.

The term **alkyl** refers to a saturated or an unsaturated, an unbranched or a branched alkyl-group, that contains of 1 to 20 carbon atoms, preferably 1 to 12 carbon atoms, especially preferably 1 to 7 carbon atoms, for example the methyl, ethyl, isopropyl, isobutyl, tert-butyl, n-hexyl, 2,2-di-methylbutyl, n-octyl, allyl, isoprenyl, or the hex-2-enyl group.

The term **heteroalkyl** refers to an alkyl group, in which one or more carbon atoms are replaced by an oxygen, nitrogen, phosphorus or sulfur, for example the methoxy or ethoxy, or a methoxymethyl, nitrile, methylcarboxyalkylester, carboxyalkylester, or 2,3-dioxyethyl group. The term **cyclo** refers to a saturated or a partly unsaturated, cyclic or a branched cylic group, that contains of one or more rings, which form a structure that contains 3 to 14 carbon atoms, especially 5 or 6 up to 10 carbons. These are for example the cyclopropyl, cyclohexyl, tetraline, or cyclohex-2-enyl groups.

The term **heterocyclo** refers to a carbocyclic group, in which one or more carbon atoms are replaced by an oxygen, a nitrogen, a phosphorus, or a sulfur atom. Furthermore, a **heterocycloalkyl** group can be substituted by an alkyl, heteroalkyl or an aryl group. It can represent, for example, a piperidine, morpholine, n-methyl-piperazine or n-phenylpiperazine group.

The terms **aryl** refer to an aromatic cyclic or branched cyclic group, which has one or more rings containing a

carbon backbone that contains of 5 to 14, especially 5 or 6 to 10 carbon atoms. In addition, an aryl group can be substituted by an alkyl or a heteroalkyl group and can, for example, be a phenyl, naphthyl, 2-, 3- or 4-methoxyphenyl, 2-, 3-, or 4-ethoxyphenyl, 4-carboxyphenylalkyl, or 4-hydroxyphenyl group.

The term **heteroaryl** refers to an aryl group, in which one or more carbon atoms are replaced by an oxygen, a nitrogen, a phophorus or a sulfur, for example the 4-pyridyl, 2-imidazolyl, 3-pyrazolyl and isochinolinyl group.

The terms **aralkyl** and **heteroaralkyl** respectively, refer to groups that suitably encompass the above definitions of aryl and heteroaryl, respectively, as well as alkyl and/or heteroalkyl and/or carbocyclic groups and/or heterocycloalkyl ring-systems, for example the tetrahydro-isochinolinyl, benzyl, 2- or 3-ethylindolyl or 4-methylpyridino group.

The terms **alkyl, heteroalkyl, cyclo, heterocycloalkyl, aryl, heteroaromatic** and **aralkyl** refer also to groups, in which one or more hydrogens of such groups are substituted by fluorine, chlorine, bromine or iodine. Furthermore, these terms will refer to groups that are substituted with unsubstituted alkyl, heteroalkyl, aralkyl or aralkyloxy groups.

The invention is explained in more detail by means of the following Examples with reference to the Figures. It shows:

Figure 1 a first embodiment of the process according to the invention;

Figure 2 a second embodiment of the process according to the invention;

Figure 3 a third embodiment of the process according to the invention;

Figure 4 a fourth embodiment of the process according to the invention; and

Figure 5 a fifth embodiment of the process according to the invention;

The schemes of Figures 1-5 illustrate different alternatives of the present process.

Figure 1 illustrates a first variant of the process of the present invention with the steps of:

(1) providing a polymer in a solvent system adapted to maintain the polymer in a dissolved state;
(2) adding of a modification reagent;
(3) adding of an appropriate catalyst to the solution of the step (2);
(4) reacting of said modification reagent with the polymer until the reaction is completed;
(5) adding of an appropriate catalyst scavenging reagent to the solution of the step (4);
(6) recovery of the solid scavenged catalyst from the solution of the step (5);
(7) recovery of the modified polymer from the solution of the step (6);

Figure 2 illustrates a second variant of the process of the present invention with the steps of:

(1) providing a polymer in a solvent system adapted to maintain the polymer in a dissolved state;
(2) adding of a modification reagent;
(3) adding of an appropriate catalyst to the solution of the step (2);
(4) reacting of said modification reagent with polymer until the reaction is completed;
(5) adding of an appropriate catalyst quenching reagent to the solution of the step (4);
(6) adding of an appropriate catalyst scavenging reagent to the solution of the step (5);
(7) recovery of the solid scavenged catalyst from the solution of the step (6);
(8) recovery of the modified polymer from the solution of the step (7);

Figure 3 illustrates a third variant of the process of the present invention with the steps of:

(1) providing a polymer in a solvent system adapted to maintain the polymer in a dissolved state;
(2) adding of a first modification reagent;
(3) adding of a second (third, fourth, etc.) modification reagent;
(4) adding of an appropriate catalyst to the solution of the step (3);
(5) reacting of said modification reagents with the polymer until the reaction is completed;
(6) adding of an appropriate catalyst scavenging reagent to the solution of the step (5);
(7) recovery of the solid scavenged catalyst from the solution of the step (6);
(8) recovery of the modified polymer from the solution of the step (7);

Figure 4 illustrates a fourth variant of the process of the present invention with the steps of:

(1) providing a polymer in a solvent system adapted to maintain the polymer in a dissolved state;
(2) adding of a first modification reagent;
(3) adding of a second (third, fourth, etc.) modification reagent;
(4) adding of an appropriate catalyst to the solution of the step (3);
(5) reacting of said modification reagents with polymer until the reaction is completed;
(6) adding of an appropriate catalyst quenching reagent to the solution of the step (5);
(7) adding of an appropriate catalyst scavenging reagent to the solution of the step (6);
(8) recovery of the solid scavenged catalyst from the solution of the step (7);
(9) recovery of the modified polymer from the solution of the step (8);

Figure 5 illustrates a fifth variant of the process of the present invention with the steps of:

(1) providing a polymer in a solvent system adapted to maintain the polymer in a dissolved state;
(2) adding of a first modification reagent;
(3) adding of a second (third, fourth, etc.) modification reagent;
(4) adding of an appropriate catalyst to the solution of the step (3);
(5) reacting of said modification reagents with polymer until the reaction is completed;
(6) adding of an appropriate catalyst quenching reagent to the solution of the step (5);
(7) adding of an appropriate catalyst scavenging reagent to the solution of the step (6);
(8) recovery of the solid scavenged catalyst from the solution of the step (7);
(9) exchange the reaction solvent with a workup solvent from the solution of the step (8);
(10) recovery of the modified polymer from the solution of the step (9)

The following are non-limiting examples illustrating the process of a chemical modification of a polysulfone backbone. The following procedures provide exemplary methods for chemical modification of polysulfone backbone and other synthetic methods used in the present invention. More specific methods are given below in the Examples, which refer to the General Procedure A. The choices and amount of reagents, catalysts, catalyst scavengers, temperature, reaction times, and other parameters are illustrative but are not considered limiting in any way. Other approaches are contemplated by and within the scope of, the present invention.

**Polysulfone chemical modification General Procedure A.**

The following procedure (in accordance to the reaction scheme of Figure 1) provides a general method for chemical modification of the polysulfone backbone.

The required amount of polysulfone resin (Ultrason S6010 Natur, BASF SE, Ludwigshafen, Germany) was stirred overnight at room temperature in an appropriate solvent to obtain a clear solution. To each of polymer solutions, a predefined amount of a modification reagent and a catalyst were added. The resulting mixture was incubated at a predefined temperature under gentle stirring. After a certain time of incubation at said temperature, a predefined amount of a finely powdered catalyst scavenger was added to each reaction mixture and incubation was continued for a predetermined time. Then, reaction mixtures were filtrated using a filter-aid and the modified polymers were precipitated by 10 volumes of ethanol. The precipitated polymer samples were thoroughly washed with ethanol and then dried in a vacuum oven at 60°C for at least 24 hours.

**Analytical methods.**

HPLC-ESI-HRMS and ESI-HRMS were performed on an LTQ Orbitrap XL apparatus, produced by Thermo Scientific (Waltham, MA, USA) coupled to a 1200 HPLC system (Agilent Technologies, Santa Clara, CA, USA) equipped with Grom-Sil-120-ODS-4-HE C18 column (3 μm, 2 x 50 mm, Grace Davison Discovery Sciences, Hollerhecke). The following standard gradient (flow rate 0.3 mL/min, solvent A: Millipore H2O + 0.1 HCOOH solvent B: AcN + 0.1 % HCOOH) was used if not otherwise specified:
$^1H$ NMR (500 MHz) spectra were recorded on Bruker Avance III 500 MHz spectrometer using $CDCl_3$ as the solvent and tetramethylsilane as the internal standard.

*Degree of substitution determination.*

The amount of newly introduced aminomethylene groups was measured using $^1H$ NMR integration of signals corresponding to methylene group protons. The degree of substitution (DS) was calculated using the following equation:

$$DS = (B/A) \cdot 100$$

where A - is the integral number of $-CH_3$ protons on bis-phenol A unit and B is integral of methylene group protons.

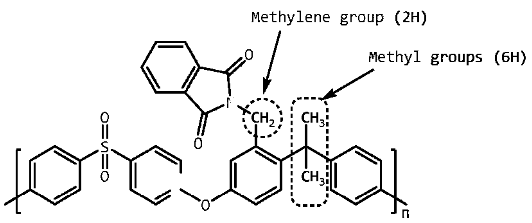


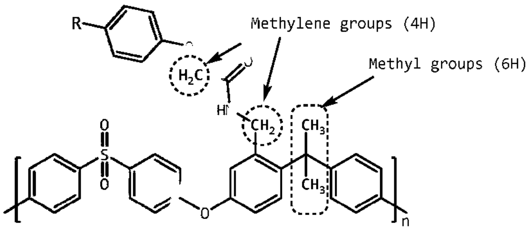


The average molecular weight and molecular weight distributions were measured by gel permeation chromatography (GPC) technique. An Agilent 1260 Infinity II with a set of two columns of pore sizes of PL-gel 5 μm MIXED-D 300 x 7.5 mm was used to determine polymer average molecular weights and polydispersity index (PDI). THF was used as the eluent at a flow rate of 0.8 mL/min, and the calibration was carried out using low polydispersity PS standards (Agilent SEC Software - 2.1.9.34851).

*GPS terms definitions:*

$M_n$ is the number average molar mass and it is the ordinary arithmetic mean. It is determined by measuring the molecular mass of N polymer molecules, summing the masses and dividing by N, as the following equation, where $N_i$ is number of species with molecular weight $M_i$.

$$Mn = \frac{\sum N_i . M_i}{\sum N_i}$$

$M_w$ is the number of weight average molar mass. Some properties are dependent on molecular size, so a larger molecule will have a larger contribution. The weight average molar mass is calculate by the following equation, where $W_i$ is the weight of molecules which have molecular weight $M_i$.

$$Mw = \sum \omega_i \cdot M_i = \frac{\sum W_i \cdot M_i}{\sum W_i} = \frac{\sum N_i \cdot M_i^2}{\sum N_i \cdot M_i}$$

With $M_n$ and $M_w$, it is possible to calculate polydispersity, dividing $M_w$ by $M_n$.

$M_z$ is the Z-average molar mass and it is determined with ultracentrifugation. Melt elasticity depends on $M_z$

$$Mz = \frac{\sum N_i \cdot M_i^3}{\sum N_i \cdot M_i^2}$$

$M_p$ is the peak of the molecular weight curve.

Example 1

Synthesis of 2-(hydroxymethyl)isoindoline-1,3-dione.

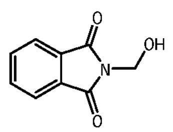

To a stirred suspension of isoindoline-1,3-dione (110.3 g, 0.75 mol) in distilled water was added formaldehyde solution (37 wt. % in water, 13.3M, contains 10-15% of methanol as stabilizer) and the resulting mixture was stirred for 30 min at ambient temperature. Hereafter, the resulting suspension was refluxed for two hours. After cooling overnight in a

refrigerator the product was filtered with suction, washed with ice-cooled water and air-dried. Yield of crude 2-(hydroxymethyl)isoindoline-1,3-dione was 126.4 g (95.1%). Recrystallization from absolute ethyl alcohol yields 122.9 g (97.2%) of original material. The product was used for subsequent acylation as is without further characterization.

Example 2

Synthesis of (1,3-dioxoisoindolin-2-yl)methyl acetate.

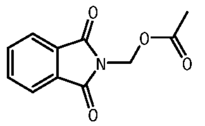

2-(hydroxymethyl)isoindoline-1,3-dione (Example 1) (35.4 g, 0.2 mol) was dissolved in 200 ml of pyridine. Acetic anhydride (22.5 ml, 0.24 mol) was added drop wise with keeping reaction mixture temperature at 0 - 5°C. Upon completion of adding, the reaction was stirred overnight at room temperature and then poured into ice-cooled water. The crystalline crude (1,3-dioxoisoindolin-2-yl)methyl acetate was collected by filtration with suction, washed with ice-cooled water and air-dried. Crystallization from absolute ethyl alcohol yields 37.7 g (0.172 mol, 85.9%) of pure crystalline (1,3-dioxoisoindolin-2-yl)methyl acetate. MS m/z 219.112 $[M+H]^+$ (219.196 calculated).

Example 3

Synthesis of (1,3-dioxoisoindolin-2-yl)methyl propionate.

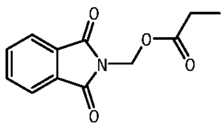

2-(hydroxymethyl)isoindoline-1,3-dione (Example 1) (35.4 g, 0.2 mol) was dissolved in 200 ml of pyridine. Propionic anhydride (30.8 ml, 0.24 mol) was added drop wise with keeping reaction mixture temperature at 0 - 5°C. Upon completion of adding, the reaction was stirred overnight at room temperature and then poured into ice-cooled water. The crystalline crude (1,3-dioxoisoindolin-2-yl)methyl propionate was collected by filtration with suction, washed with ice-cooled water and air-dried. Crystallization from absolute ethyl alcohol water mixture yields 43.8 g (0.172 mol, 93.9%) of pure crystalline (1,3-dioxoisoindolin-2-yl)methyl propionate. MS m/z 233.037 $[M+H]^+$ (233.069 calculated).

Example 4

Synthesis of (1,3-dioxoisoindolin-2-yl)methyl isobutyrate.

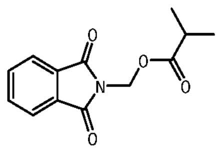

2-(hydroxymethyl)isoindoline-1,3-dione (Example 1) (35.4 g, 0.2 mol) was dissolved in 200 ml of pyridine. Isobutyric anhydride (39.8 ml, 0.24 mol) was added drop wise with keeping reaction mixture temperature at 0 - 5°C. Upon completion of adding, the reaction was stirred overnight at room temperature and then poured into ice-cooled water. The crystalline crude (1,3-dioxoisoindolin-2-yl)methyl isobutyrate was collected by filtration with suction, washed with ice-cooled water and air-dried. Crystallization from absolute ethyl alcohol water mixture yields 39.4 g (0.159 mol, 79.7%) of pure crystalline (1,3-dioxoisoindolin-2-yl)methyl isobutyrate. MS m/z 247.031 $[M+H]^+$ (247.084 calculated).

Example 5

Synthesis of (1,3-dioxoisoindolin-2-yl)methyl butyrate.

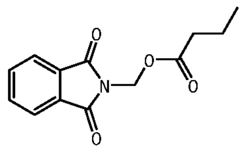

2-(hydroxymethyl)isoindoline-1,3-dione (Example 1) (35.4 g, 0.2 mol) was dissolved in 200 ml of pyridine. Isobutyric anhydride (39.4 ml, 0.24 mol) was added drop wise with keeping reaction mixture temperature at 0 - 5°C. Upon completion of adding, the reaction was stirred overnight at room temperature and then poured into ice-cooled water. The crystalline crude (1,3-dioxoisoindolin-2-yl)methyl isobutyrate was collected by filtration with suction, washed with ice-cooled water and air-dried. Crystallization from absolute ethyl alcohol water mixture yields 42.2 g (0.171 mol, 85.3%) of pure crystalline (1,3-dioxoisoindolin-2-yl)methyl isobutyrate. MS m/z 247.042 $[M+H]^+$ (247.084 calculated).

Example 6

Synthesis of (1,3-dioxoisoindolin-2-yl)methyl pivalate.

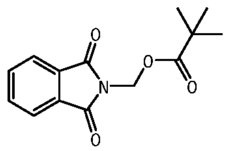

2-(hydroxymethyl)isoindoline-1,3-dione (Example 1) (26.6 g, 0.15 mol) and N-methylmorpholine (19.8 ml, 0.18 mol) were dissolved in 300 ml of dichloromethane. Trimethylacetyl chloride (20.3 ml, 0.165 mol) was added drop wise with keeping reaction mixture temperature at 0 - 5°C. Upon completion of adding, the reaction was stirred overnight at room temperature. The progress of the reaction was monitored by TLC and LC/MS. Then reaction mixture was washed sequentially with 10% (v/w) sodium hydrogen sulfate, saturated sodium chloride, saturated sodium hydrogen carbonate and dried over anhydrous magnesium sulfate, filteredand concentrated in vacuum. Crystallization from absolute ethyl alcohol water mixture yields 34.2 g (0.172 mol, 91.5%) of pure crystalline (1,3-dioxoisoindolin-2-yl)methyl pivalate. MS m/z 261.067 $[M+H]^+$ (261.100 calculated).

Example 7

Synthesis of (1,3-dioxoisoindolin-2-yl)methyl benzoate.

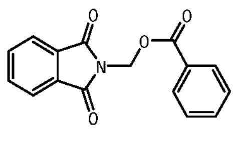

2-(hydroxymethyl)isoindoline-1,3-dione (Example 1) (17.7 g, 0.1 mol) and N-methylmorpholine (12.1 ml, 0.11 mol) were dissolved in 200 ml of dichloromethane. Benzoyl chloride (12.8 ml, 0.11 mol) was added drop wise with keeping reaction mixture temperature at 0 - 5°C. Upon completion of adding, the reaction was stirred overnight at room temperature. The progress of the reaction was monitored by TLC and LC/MS. Then reaction mixture was washed sequentially with 10% (v/w) sodium hydrogen sulfate, saturated sodium chloride, saturated sodium hydrogen carbonate and dried over anhydrous magnesium sulfate, filteredand concentrated in vacuum. Crystallization from absolute isopropyl alcohol yields 20.3 g (0.078 mol, 77.7%) of pure crystalline (1,3-dioxoisoindolin-2-yl)methyl benzoate. MS m/z 281.017

[M+H]+ (281.069 calculated).

Example 8

Synthesis of (1,3-dioxoisoindolin-2-yl)methyl isobutyl carbonate.

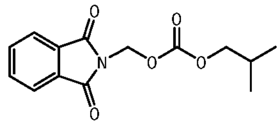

2-(hydroxymethyl)isoindoline-1,3-dione (Example 1) (13.3 g, 0.075 mol) and N-methylmorpholine (9.1 ml, 0.083 mol) were dissolved in 150 ml of dichloromethane. Isobutyl chloroformate (10.8 ml, 0.083 mol) was added drop wise with keeping reaction mixture temperature at 0 - 5°C. Upon completion of adding, the reaction was stirred overnight at room temperature. The progress of the reaction was monitored by TLC and LC/MS. Then reaction mixture was washed sequentially with 10% (v/w) sodium hydrogen sulfate, saturated sodium chloride, saturated sodium hydrogen carbonate and dried over anhydrous magnesium sulfate, filteredand concentrated in vacuum. Crystallization from absolute isopropyl alcohol water mixture yields 18.5 g (0.067 mol, 89.1%) of pure crystalline (1,3-dioxoisoindolin-2-yl)methyl isobutyl carbonate. MS m/z 277.047 [M+H]+ (277.095 calculated).

Example 9

Synthesis of (1,3-dioxoisoindolin-2-yl)methyl ethyl carbonate.

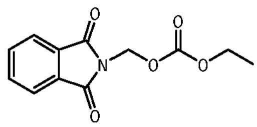

2-(hydroxymethyl)isoindoline-1,3-dione (Example 1) (13.3 g, 0.075 mol) and N-methylmorpholine (9.1 ml, 0.083 mol) were dissolved in 150 ml of dichloromethane. Ethyl chloroformate (7.9 ml, 0.083 mol) was added drop wise with keeping reaction mixture temperature at 0 - 5°C. Upon completion of adding, the reaction was stirred overnight at room temperature. The progress of the reaction was monitored by TLC and LC/MS. Then reaction mixture was washed sequentially with 10% (v/w) sodium hydrogen sulfate, saturated sodium chloride, saturated sodium hydrogen carbonate and dried over anhydrous magnesium sulfate, filteredand concentrated in vacuum. Crystallization from absolute isopropyl alcohol water mixture yields 12.5 g (0.05 mol, 66.8%) of pure crystalline (1,3-dioxoisoindolin-2-yl)methyl isobutyl carbonate. MS m/z 249.011 [M+H]+ (249.064 calculated).

Example 10

Synthesis of methyl 2-(4-benzoylphenoxy)acetate.

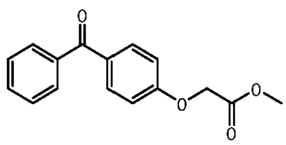

To a vigorous stirring mixture of 4-hydroxybenzophenone (60.0 g, 0.265 mol), potassium carbonate (73.25 g, 0.530 mol) in 1000 ml of acetone, methyl bromoacetate (31.47 ml, 0.331 mol) was added drop-wise but quickly. The reaction mixture was stirred at room temperature overnight. The progress of the reaction was monitored by TLC and LC/MS. Upon reaction completed, the reaction mixture was filtered through Celite pad and concentrated in vacuum. The

residue was re-dissolved in 500 ml of ethylacetate and washed sequentially with 10% (v/w) sodium hydrogen sulfate, 5M solution of sodium chloride, and 1M solution of sodium hydrogen carbonate and dried over anhydrous magnesium sulfate, filteredand concentrated in vacuum. Crystallization from methyl tert-butyl ether yields 69.8 g (0.258 mol, 97.5%) of pure crystalline methyl 2-(4-benzoylphenoxy)acetate. MS m/z 270.057 $[M+H]^+$ (270.089 calculated).

Example 11

Synthesis of 2-(4-benzoylphenoxy)acetic acid.

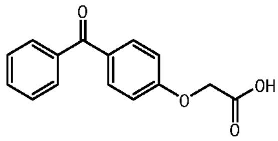

Crystalline methyl 2-(4-benzoylphenoxy)acetate **(Example 10,** 69.8 g, 0.258 mol) was dissolved in 300 ml of methanol. 350 ml of 2N sodium hydroxide was added under vigorous stirring. The resulting mixture was refluxed overnight, cooled and methanol was evaporated under reduced pressure. The aqueous phase was acidified to pH 2 by drop-wise addition of 360 ml of 2N solution of hydrochloric acid. The precipitate was isolated by filtration , washed several times with cold water, and dried in vacuum at 100°C. Crystallization from absolute ethanol yields 62.7 g (0.245 mol, 89.3%) of pure crystalline 2-(4-benzoylphenoxy)acetic acid. MS m/z 256.043 $[M-H]^-$ (256.074 calculated).

Example 12

Synthesis of 2-(4-benzoylphenoxy)acetamide.

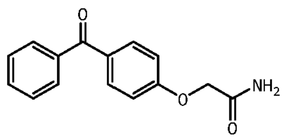

A solution of 2-(4-benzoylphenoxy)acetic acid **(Example 11,** 40.0 g, 0.156 mol) in 400 ml of anhydrous tetrahydrofuran was stirred and chilled to -10°C in dry ice - acetone bath. N-methylmorpholine (18.9 ml, 0.172 mol) was added, following isobutyl chloroformate (21.4 ml, 0.164 mol) giving a precipitate. After 15 min, ice-cold 1,1,1,3,3,3-hexamethyldisilazane (39.0 ml, 0.187 mol) at once and stirring was continued for 1 h at -10°C. Then, the cooling bath was removed, the reaction mixture was allowed to warm to room temperature, and the reaction mixture was stirred at room temperature overnight.. The progress of the reaction was monitored by TLC and LC/MS. Upon reaction completed, the reaction mixture was evaporated to dryness under reduced pressure. The resulting solid substance was suspended in 200 ml of ice-cold water. The precipitate was isolated by filtration , washed several times with cold water, and dried in vacuum at 100°C. Crystallization from absolute ethanol water mixture yields 36.1 g (0.141 mol, 90.6%) of pure crystalline 2-(4-benzoylphenoxy)acetamide. MS m/z 255.072 $[M+H]^+$ (255.090 calculated).

Example 13

Synthesis of 2-(4-benzoylphenoxy)-N-(hydroxymethyl)acetamide.

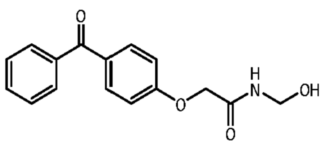

2-(4-benzoylphenoxy)-N-(hydroxymethyl)acetamide (25.5 g, 0.1 mol) was added to a solution consisting of 7.9 ml of formaldehyde solution (37 wt. % in water, contains 10-15% Methanol as stabilizer, 13.3M), 100 ml of water, and potassium carbonate (0.69 g, 0.005 mol). The resulting mixture was warmed in water-bath (60 - 80°C) until clear solution was obtained. The water bath was removed and precipitation occurred immediately. The suspension was stirred overnight at room temperature, then extracted three times with 100 ml dichloromethane. The combined organic phase was washed sequentially with 5M solution of sodium chloride, water and dried over anhydrous magnesium sulfate. Filtration, concentration, and re-crystallization from dichloromethane/hexane give the product (19.2 g, 0.085 mol, 84.9%) as white crystals. The obtained product was used for subsequent acetylating reaction without further purification.

Example 14

Synthesis of (2-(4-benzoylphenoxy)acetamido)methyl acetate.

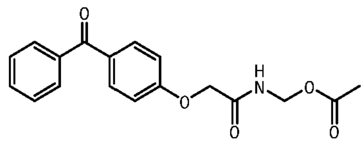

2-(4-benzoylphenoxy)-N-(hydroxymethyl)acetamide (**Example 13**) (14.3 g, 0.05 mol) and N-methylmorpholine (6.6 ml, 0.06 mol) were dissolved in 200 ml of dichloromethane. Acetyl chloride (3.9 ml, 0.055 mol) was added drop wise with keeping reaction mixture temperature at 0 - 5°C. Upon completion of adding, the reaction was stirred overnight at room temperature. The progress of the reaction was monitored by TLC and LC/MS. Then reaction mixture was washed sequentially with 10% (v/w) sodium hydrogen sulfate, saturated sodium chloride, saturated sodium hydrogen carbonate and dried over anhydrous magnesium sulfate, filteredand concentrated in vacuum. Crystallization from absolute ethyl alcohol water mixture yields 12.7 g (0.039 mol, 77.6%) of pure crystalline (2-(4-benzoylphenoxy)acetamido)methyl acetate. MS m/z 327.091 $[M+H]^+$ (327.111 calculated).

Example 15

Synthesis of dimethyl 5-hydroxyisophthalate.

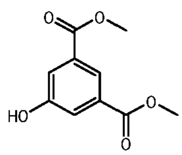

To 5-Hydroxyisophthalic acid (36.4 g, 0.2 mol) are placed in 300 ml of methanol, along 2.2 ml of concentrated sulfuric acid was added drop-wise. The resulting solution was refluxed overnight. Upon reaction completed, the reaction mixture was evaporated to dryness under reduced pressure. The resulting solid substance was suspended in 200 ml of ice-cold water. The precipitate was isolated by filtration , washed several times with cold water, and dried in vacuum at 100°C. Crystallization from methanol-water mixture yields 40.6 g (0.193 mol, 96.7%) of pure crystalline dimethyl 5-hydroxyisophthalate. MS m/z 210.011 $[M+H]^+$ (210.053 calculated).

Example 16

Synthesis of dimethyl 5-(2-(tert-butoxy)-2-oxoethoxy)isophthalate.

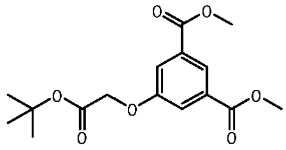

To a vigorous stirring mixture of dimethyl 5-hydroxyisophthalate (22.7 g, 0.108 mol), potassium carbonate (29.87 g, 0.216 mol) in 500 ml of acetone, tert-butyl bromoacetate (17.3 ml, 0.119 mol) was added drop-wise but quickly. The reaction mixture was stirred at 40°C overnight. The progress of the reaction was monitored by TLC and LC/MS. Upon reaction completed, the reaction mixture was filtered through Celite pad and concentrated in vacuum. The residue was re-dissolved in 300 ml of ethylacetate and washed sequentially with 10% (v/w) sodium hydrogen sulfate, 5M solution of sodium chloride, and 1M solution of sodium hydrogen carbonate and dried over anhydrous magnesium sulfate, filteredand concentrated in vacuum. Crystallization from methyl tert-butyl ether/hexane mixture yields 29.24 g (0.09 mol, 83.4%) of pure crystalline dimethyl 5-(2-(tert-butoxy)-2-oxoethoxy)isophthalate. MS m/z 324.087 $[M+H]^+$ (324.121 calculated).

Example 17

Synthesis of 2-(3,5-bis(methoxycarbonyl)phenoxy)acetic acid.

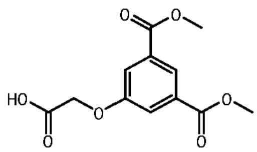

To the stirred solution of 29.24 g dimethyl (0.09 mol) of 5-(2-(tert-butoxy)-2-oxoethoxy)isophthalate (**Example 16**) in 300 ml of dichloromethane, trifluoacetic acid (200 ml) was added drop-wise, with keeping reaction mixture temperature at 0 - 5°C. Upon completion of adding, the reaction was stirred overnight at room temperature. The progress of the reaction was monitored by TLC and LC/MS. After completion of the reaction, the reaction mixture was evaporated to dryness under reduced pressure. The resulting solid substance was suspended in 300 ml of toluene and evaporated again to remove the last traces of trifluoroacetic acid. The precipitate was isolated by filtration, washed several times with cold methyl tert-butyl ether, and dried in vacuum at 100°C. The yield was 24.1 g (0.09 mol, 99.7%) of pure crystalline 2-(4-benzoylphenoxy)acetamide. MS m/z 268.025 $[M-H]^-$ (268.058 calculated).

Example 18

Synthesis of dimethyl 5-(2-amino-2-oxoethoxy)isophthalate.

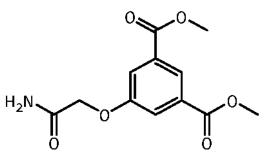

A solution of 2-(3,5-bis(methoxycarbonyl)phenoxy)acetic acid (**Example 17,** 20.0 g, 0.075 mol) in 200 ml of anhydrous tetrahydrofuran was stirred and chilled to -10°C in dry ice - acetone bath. N-methylmorpholine (9.0 ml, 0.082 mol) was added, following isobutyl chloroformate (10.2 ml, 0.078 mol) giving a precipitate. After 15 min, ice-cold 1,1,1,3,3,3-hexamethyldisilazane (18.6 ml, 0.089 mol) at once and stirring was continued for 1 h at -10°C. Then, the cooling bath was removed, the reaction mixture was allowed to warm to room temperature, and the reaction mixture was stirred at room temperature overnight.. The progress of the reaction was monitored by TLC and LC/MS. Upon reaction completed, the reaction mixture was evaporated to dryness under reduced pressure. The resulting solid substance was suspended in 200 ml of ice-cold water. The precipitate was isolated by filtration , washed several times with cold water, and dried in vacuum at 100°C. Crystallization from absolute ethanol water mixture yields 36.1 g (0.141 mol, 90.6%) of pure crystalline dimethyl 5-(2-amino-2-oxoethoxy)isophthalate. MS m/z 267.012 $[M+H]^+$ (267.074 calculated).

Example 19

Synthesis of dimethyl 5-(2-((hydroxymethyl)amino)-2-oxoethoxy)isophthalate.

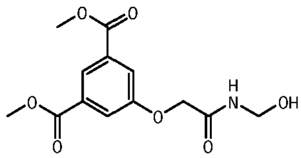

dimethyl 5-(2-amino-2-oxoethoxy)isophthalate **(Example 18,** 20.0 g, 0.075 mol) was added to a solution consisting of 5.9 ml of formaldehyde solution (37 wt. % in water, contains 10-15% Methanol as stabilizer, 13.3M), 75 ml of water, and potassium carbonate (0.52 g, 0.004 mol). The resulting mixture was warmed in water-bath (60 C) until clear solution was obtained. The water bath was removed and precipitation occurred immediately. The suspension was stirred overnight at room temperature, then extracted three times with 100 ml dichloromethane. The combined organic phase was washed sequentially with 5M solution of sodium chloride, water and dried over anhydrous magnesium sulfate. Filtration, concentration, and re-crystallization from dichloromethane/hexane give the product (17.3 g, 0.058 mol, 77.6%) as white crystals. The obtained product was used for subsequent acetylating reaction without further purification.

Example 20

Synthesis of dimethyl 5-(2-((acetoxymethyl)amino)-2-oxoethoxy)isophthalate.

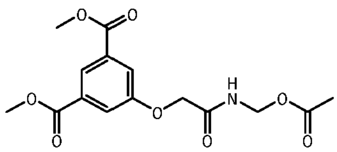

2-(4-benzoylphenoxy)-N-(hydroxymethyl)acetamide **(Example 19,** 17.8 g, 0.06 mol) and N-methylmorpholine (7.9 ml, 0.072 mol) were dissolved in 300 ml of dichloromethane. Acetyl chloride (4.7 ml, 0.066 mol) was added drop wise with keeping reaction mixture temperature at 0 - 5°C. Upon completion of adding, the reaction was stirred overnight at room temperature. The progress of the reaction was monitored by TLC and LC/MS. Then reaction mixture was washed sequentially with 10% (v/w) sodium hydrogen sulfate, saturated sodium chloride, saturated sodium hydrogen carbonate and dried over anhydrous magnesium sulfate, filteredand concentrated in vacuum. Crystallization from absolute ethyl alcohol water mixture yields 14.6 g (0.043 mol, 71.7%) of pure crystalline dimethyl 5-(2-((acetoxymethyl)amino)-2-oxoethoxy)isophthalate. MS m/z 339.023 $[M+H]^+$ (339.095 calculated).

Example 21

Synthesis of 6-(1,3-dioxoisoindolin-2-yl)hexanoic acid.

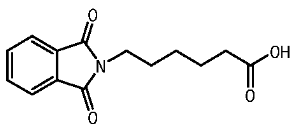

A stirred mixture of 6-aminocaproic acid (65.6 g, 0.5 mol), phthalic anhydride (74.1 g, 0.5 mol), and acetic acid (115 ml) was heated to reflux for 9 h. The product that crystallized on cooling was isolated by filtration , washed several times with water, and dried in vacuum at 100°C to obtain 124.2 g (95.1%) of -(1,3-dioxoisoindolin-2-yl)hexanoic acid that was homogeneous by LC/MS and TLC, and is used in the next step with no further purification. MS m/z 261.24 $[M-H]^-$ (261.10 calculated).

Example 22

Synthesis of 6-(1,3-dioxoisoindolin-2-yl)hexanamide.

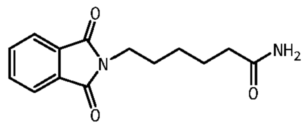

4

A solution of 6-(1,3-dioxoisoindolin-2-yl)hexanoic acid **(Example 21,** 40.0 g, 0.153 mol) in 400 ml of anhydrous tetrahydrofuran was stirred and chilled to -10°C in dry ice - acetone bath. N-methylmorpholine (18.5 ml, 0.168 mol) was added, following isobutyl chloroformate (21.0 ml, 0.161 mol) giving a precipitate. After 15 min, ice-cold 1,1,1,3,3,3-hexamethyldisilazane (38.2 ml, 0.184 mol) at once and stirring was continued for 1 h at -10°C. Then, the cooling bath was removed, the reaction mixture was allowed to warm to room temperature, and the reaction mixture was stirred at room temperature overnight.. The progress of the reaction was monitored by TLC and LC/MS. Upon reaction completed, the reaction mixture was evaporated to dryness under reduced pressure. The resulting solid substance was suspended in 200 ml of ice-cold water. The precipitate was isolated by filtration , washed several times with cold water, and dried in vacuum at 100°C. Crystallization from absolute ethanol water mixture yields 37.2 g (0.143 mol, 93.4%) of pure crystalline 6-(1,3-dioxoisoindolin-2-yl)hexanamide. MS m/z 267.075 $[M+H]^+$ (260.116 calculated).

Example 23

Synthesis of (6-(1,3-dioxoisoindolin-2-yl)hexanamido)methyl acetate.

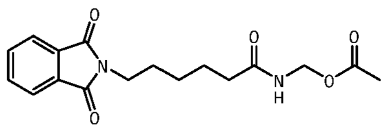

6-(1,3-dioxoisoindolin-2-yl)hexanamide **(Example 22,** 32.0 g, 0.123 mol) and paraformaldehyde (4.43 g, 0.148 mol, corresponding to formaldehyde) were dissolved in 70 ml of glacial acetic acid. To the resulting suspension, acetic anhydride (57.8 g, 0.615 mol) was added at once and reaction mixture allow to react 12h at room temperature under gentle stirring. Then, the reaction mixture was heated at 60°C for next 12h. The progress of the reaction was monitored by TLC and LC/MS. Upon reaction completed, the reaction mixture was evaporated to dryness under reduced pressure. The resulting solid substance was crystallized two times from acetone. The yield of crystalline (6-(1,3-dioxoisoindolin-2-yl) hexanamido)methyl acetate was 37.2% (15.2 g, 0.046 mol). MS m/z 332.144 $[M+H]^+$ (332.137 calculated).

Example 24

Synthesis of N-methyl-N-(perfluorobenzoyl)glycine.

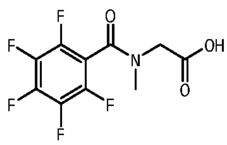

To suspension of sarcosine (25.0 g, 0.281 mol) in 280 ml of anhydrous dichloromethane chlorotrimethylsilane (48.5 ml, 60.97 g, 0.561 mol) was added at once. The resulting suspention was refluxed 1.5 hours. Then, heating bath was replaced by ice bath and N,N-diisopropylethylamine (102.0 ml, 79.79 g, 0.617 mol was added dropwise and incubation continued during 2 hours. Then pentafluorobenzoyl chloride (32.3 ml, 51.75 g, 0.224 mol) was added dropwise and

incubation continued during туче 2 hours. Then, the cooling bath was removed, the reaction mixture was allowed to warm to room temperature, and the reaction mixture was stirred at room temperature overnight. The progress of the reaction was monitored by TLC and LC/MS. Upon reaction completed, the reaction mixture was evaporated to dryness under reduced pressure. The resulting solid substance was suspended in 200 ml of ice-cold 2M HCl. The precipitate was isolated by filtration , washed several times with cold water, and dried in vacuum at 100°C. Crystallization from dichloroethane yields 56.8 g (0.2 mol, 71.0%) of pure crystalline N-methyl-N-(perfluorobenzoyl)glycine. MS m/z 284.075 $[M+H]^+$ (284.027 calculated).

Example 25

Synthesis of N-(2-amino-2-oxoethyl)-2,3,4,5,6-pentafluoro-N-methylbenzamide.

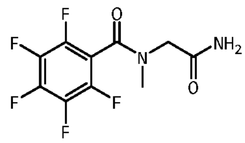

A solution of N-methyl-N-(perfluorobenzoyl)glycine **(Example 24,** 40.0 g, 0.141 mol) in 400 ml of anhydrous tetrahydrofuran was stirred and chilled to -10°C in dry ice - acetone bath. N-methylmorpholine (17.1 ml, 0.155 mol) was added, following isobutyl chloroformate (19.3.0 ml, 0.161 mol) giving a precipitate. After 15 min, ice-cold 1,1,1,3,3,3-hexamethyldisilazane (35.3 ml, 0.148 mol) at once and stirring was continued for 1 h at -10°C. Then, the cooling bath was removed, the reaction mixture was allowed to warm to room temperature, and the reaction mixture was stirred at room temperature overnight. The progress of the reaction was monitored by TLC and LC/MS. Upon reaction completed, the reaction mixture was evaporated to dryness under reduced pressure. The resulting solid substance was suspended in 200 ml of ice-cold water. The precipitate was isolated by filtration , washed several times with cold water, and dried in vacuum at 100°C. Crystallization from absolute ethanol water mixture yields 35.3 g (0.125 mol, 88.6%) of pure crystalline N-(2-amino-2-oxoethyl)-2,3,4,5,6-pentafluoro-N-methylbenzamide. MS m/z 283.061 $[M+H]^+$ (283.043 calculated).

Example 26

Synthesis of (2-(2,3,4,5,6-pentafluoro-N-methylbenzamido)acetamido)methyl acetate.

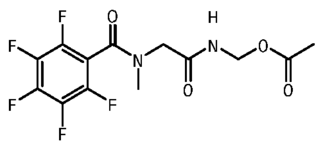

N-(2-amino-2-oxoethyl)-2,3,4,5,6-pentafluoro-N-methylbenzamide **(Example 25,** 34.7 g, 0.123 mol) and paraformaldehyde (4.43 g, 0.148 mol, corresponding to formaldehyde) were dissolved in 70 ml of glacial acetic acid. To the resulting suspension, acetic anhydride (57.8 g, 0.615 mol) was added at once and reaction mixture allow to react 12h at room temperature under gentle stirring. Then, the reaction mixture was heated at 60°C for next 12h. The progress of the reaction was monitored by TLC and LC/MS. Upon reaction completed, the reaction mixture was evaporated to dryness under reduced pressure. The resulting solid substance was crystallized two times from methyl tert-butyl ether cyclohexane mixture 2 times. The yield of crystalline (2-(2,3,4,5,6-pentafluoro-N-methylbenzamido)acetamido)methyl acetate was 65.0% (28.45 g, 0.080 mol). MS m/z 355.144 $[M+H]^+$ (355.064 calculated).

Example 27

Using of (6-(1,3-dioxoisoindolin-2-yl)hexanamido)methyl acetate as the modification reagent together with boron trifluoride etherate as the catalyst for modification of the polysulfone backbone.

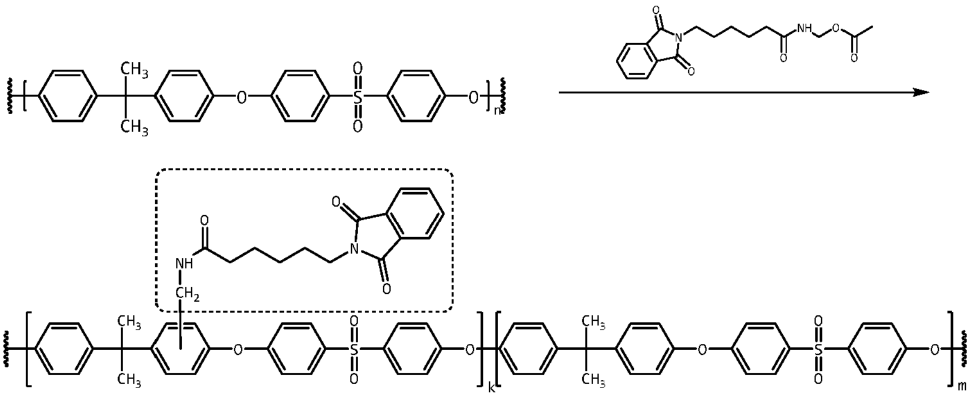

The method of the polysulfone modification used in this example follows the Polysulfone chemical modification General Procedure A.

Experimental parameters which are common across all samples in this example:

| | |
|---|---|
| Polysulfone weight, g | 15 |
| Polysulfone repeating units (PRU), mol | 0.034 |
| Solvent | 1,2-dichloroethane |
| Solvent volume, ml | 100 |
| Modification reagent (MR) | (6-(1,3-dioxoisoindolin-2-yl)hexanamido)methyl acetate |
| Catalyst (Cat) | Boron trifluoride etherate |
| Cat/MR molar ratio | 2.00 |
| Temperature ºC | 40 |
| Catalyst scavenger (CatSc) | KF |
| CatSc/Cat molar ratio | 2.00 |
| Incubation with CatSc, hours | 6.00 |

Example 28

Simulteneous incorporation of two structurally different pendant functional groups using of (2-(4-benzoylphenoxy)acetamido)methyl acetate and diethyl 5-(2-((acetoxymethyl)amino)-2-oxoethoxy)isophthalate as the modification reagent together with boron trifluoride etherate as the catalyst.

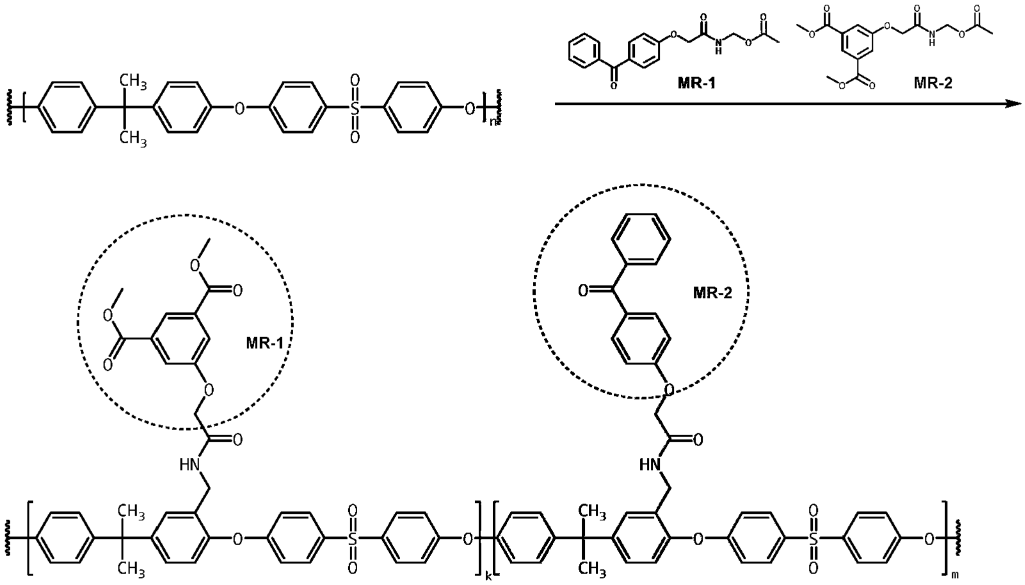


| MR-1 | MR-1 |
|---|---|
| 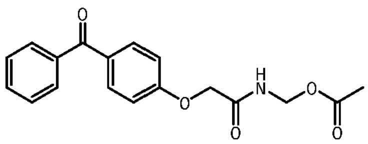 (2-(4-benzoylphenoxy)acetamido) methyl acetate | 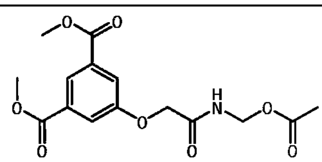 dimethyl 5-(2-((acetoxymethyl)amino)-2-oxoethoxy)isophthalate |

The method of the polysulfone modification used in this example follows the Polysulfone chemical modification General Procedure A.

Experimental parameters which are common across all samples in this example:

| | |
|---|---|
| Polysulfone weight, g | 1.00 |
| Polysulfone repeating units (PRU), mmol | 2.260 |
| Solvent | dichloromethane |
| Solvent volume, ml | 10 |
| Catalyst (Cat) | Boron trifluoride etherate |
| Cat/MR molar ratio | 4.00 |
| Catalyst weight, g | 0.449 |
| Catalyst amount, mmol | 3.164 |
| Temperature, ºC | 20 |
| Reaction time, hours | 24 |

Example 29

Incorporation of four structurally similar pendant functional groups bearing different leaving groups using boron trifluoride acetic acid complex as the catalyst.

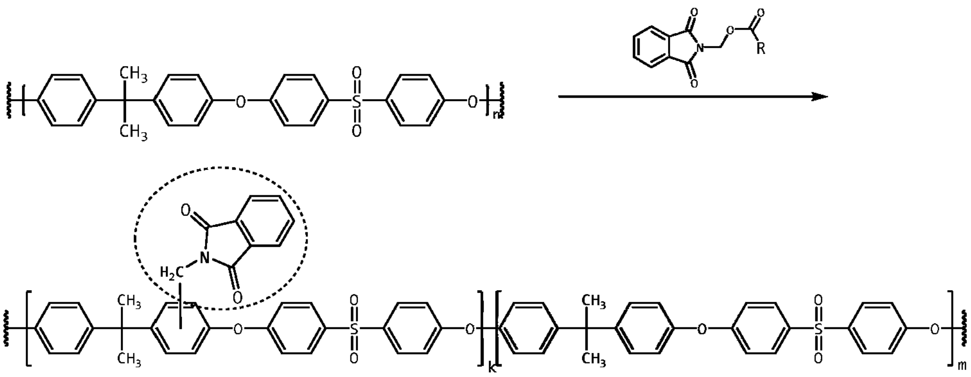

| | |
|---|---|
| 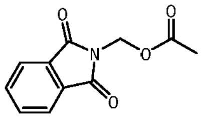 (1,3-dioxoisoindolin-2-yl) methyl acetate | 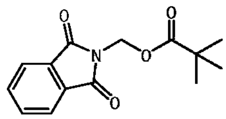 (1,3-dioxoisoindolin-2-yl) methyl pivalate |
| 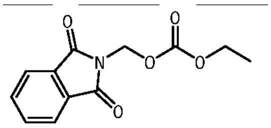 (1,3-dioxoisoindolin-2-yl) methyl ethyl carbonate | 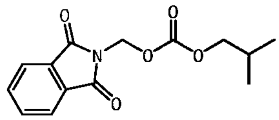 (1,3-dioxoisoindolin-2-yl) methyl isobutyl carbonate |

The method of the polysulfone modification used in this example follows the Polysulfone chemical modification General Procedure A.

Experimental parameters which are common across all samples in this example:

| | |
|---|---|
| Polysulfone weight, g | 15 |
| Polysulfone repeating units (PRU), mol | 0.034 |
| Solvent | 1,2-dichloroethane |
| Solvent volume, ml | 100 |
| MR/PRU ratio | 0.60 |
| MR amount, mol | 0.0203 |
| Catalyst (Cat) | boron trifluoride acetic acid complex |
| Cat/MR molar ratio | 0.00 |
| Catalyst weight, g | 7.643 |
| Catalyst amount, mol | 0.0407 |
| Temperature, ºC | 20 |
| Catalyst scavenger (CatSc) | KF |
| CatSc/Cat molar ratio | 4.00 |
| CatSc amount, g | 9.452 |
| Incubation with CatSc, hours | 6.00 |

<u>Example 30</u>

Comparison of the kinetics of polysulfone modification depending on the structure of leaving group using boron trifluoride acetic acid complex as the catalyst.

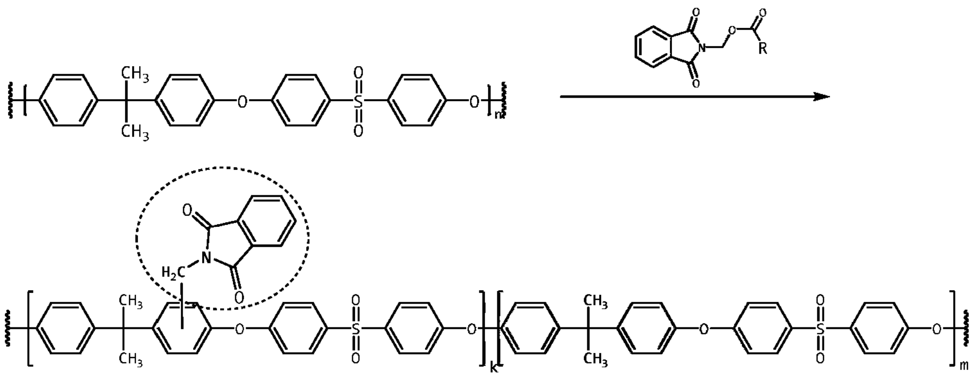

| | |
|---|---|
| 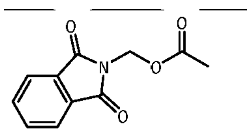 (1,3-dioxoisoindolin-2-yl) methyl acetate | 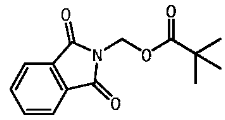 (1,3-dioxoisoindolin-2-yl) methyl pivalate |

The method of the polysulfone modification used in this example follows the Polysulfone chemical modification General Procedure A.

Experimental parameters which are common across all samples in this example:

| | |
|---|---|
| Polysulfone weight, g | 15 |
| Polysulfone repeating units (PRU), mol | 0.034 |
| Solvent | 1,2-dichloroethane |
| Solvent volume, ml | 100 |
| MR/PRU ratio | 0.60 |
| MR amount, mol | 0.0203 |
| Catalyst (Cat) | boron trifluoride acetic acid complex |
| Cat/MR molar ratio | 2.00 |
| Catalyst weight, g | 7.643 |
| Catalyst amount, mol | 0.0407 |
| Temperature, ºC | 20 |
| Catalyst scavenger (CatSc) | KF |
| CatSc/Cat molar ratio | 4.00 |
| CatSc amount, g | 9.452 |
| Incubation with CatSc, hours | 6.00 |

Example 32

The dependence of the modification efficiency on the catalyst / reagent ratio.

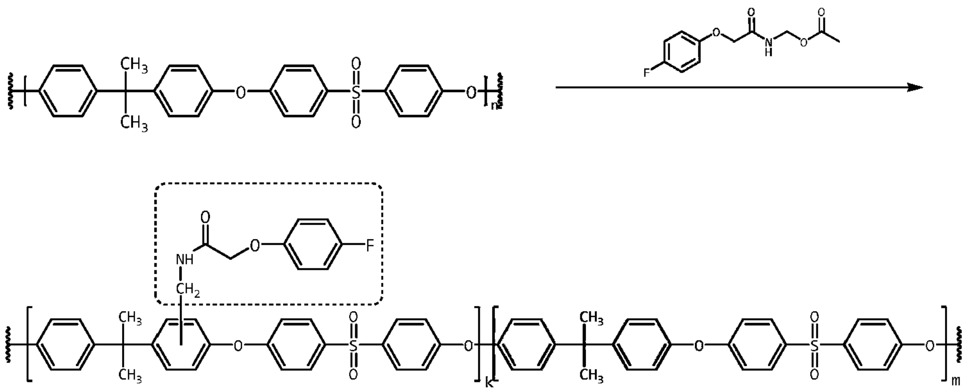

The method of the polysulfone modification used in this example follows the Polysulfone chemical modification General Procedure A.

Experimental parameters which are common across all samples in this example:

| | |
|---|---|
| Polysulfone weight, g | 15.00 |
| Polysulfone repeating units (PRU), mol | 0.034 |
| Solvent | dichloromethane |
| Solvent volume, ml | 100 |
| Modification reagent (MR) | (2-(4-fluorophenoxy)acetamido)methyl acetate |
| MR/PRU ratio | 0.60 |
| MR amount, mol | 0.0203 |
| MR weight, g | 4.9058 |
| Catalyst (Cat) | boron trifluoride etherate |
| Temperature, ºC | 20 |

Example 35

Comparison of the different solvents.

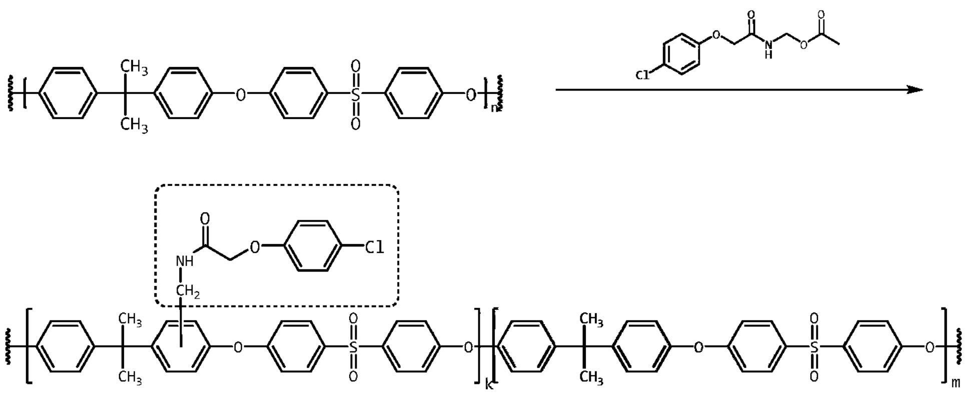

The method of the polysulfone modification used in this example follows the Polysulfone chemical modification General Procedure A.

Experimental parameters which are common across all samples in this example:

| | |
|---|---|
| Polysulfone weight, g | 6.00 |
| Polysulfone repeating units (PRU), mol | 0.0136 |

(continued)

| | |
|---|---|
| Modification reagent (MR) | (2-(4-chlorophenoxy)acetamido)methyl acetate |
| MR/PRU ratio | 0.20 |
| MR amount, mol | 0.0027 |
| MR weight, g | 0.699 |
| Catalyst (Cat) | boron trifluoride etherate |
| Cat/MR molar ratio | 6.00 |
| Catalyst amount, mol | 0.0163 |
| Catalyst weight, g | 2.309 |
| Temperature, ºC | 22 |
| Reaction time, hours | 24 |

Results:

| Sample ID | Reaction solvent | Reagent / RU ratio | Degree of substitution | Incorporation yield Experiment | Incorporation yield Average |
|---|---|---|---|---|---|
| PSU-092 | Dichloromethane | 0.20 | 0.16 | 82.2% | 83.3% |
| PSU-093 | Dichloromethane | 0.20 | 0.17 | 84.4% | |
| PSU-094 | Chlorophorm | 0.20 | 0.17 | 84.3% | 84.6% |
| PSU-095 | Chlorophorm | 0.20 | 0.17 | 85.0% | |
| PSU-096 | 1,2-Dichloroethane | 0.20 | 0.18 | 87.7% | 87.1% |
| PSU-097 | 1,2-Dichloroethane | 0.20 | 0.17 | 86.5% | |

<u>Example 36</u>

Incorporation of the benzophenone functionality onto polysulfone backbone.

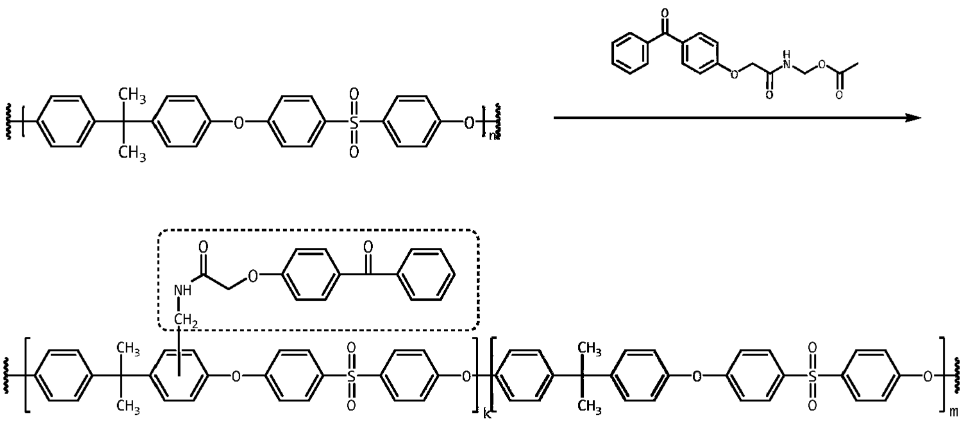

The method of the polysulfone modification used in this example follows the Polysulfone chemical modification General Procedure A.

Experimental parameters which are common across all samples in this example:

| | |
|---|---|
| Polysulfone weight, g | 6.00 |

(continued)

| | |
|---|---|
| Polysulfone repeating units (PRU), mol | 0.0136 |
| Solvent | dichloromethane |
| Solvent volume, ml | 40.0000 |
| Modification reagent (MR) | (2-(4-benzoylphenoxy)acetamido)methyl acetate |
| Catalyst (Cat) | boron trifluoride etherate |
| Cat/MR molar ratio | 6.00 |
| Temperature, ºC | 22 |
| Reaction time, hours | 24 |

Example 38

Incorporation of complex multivalent functionality.

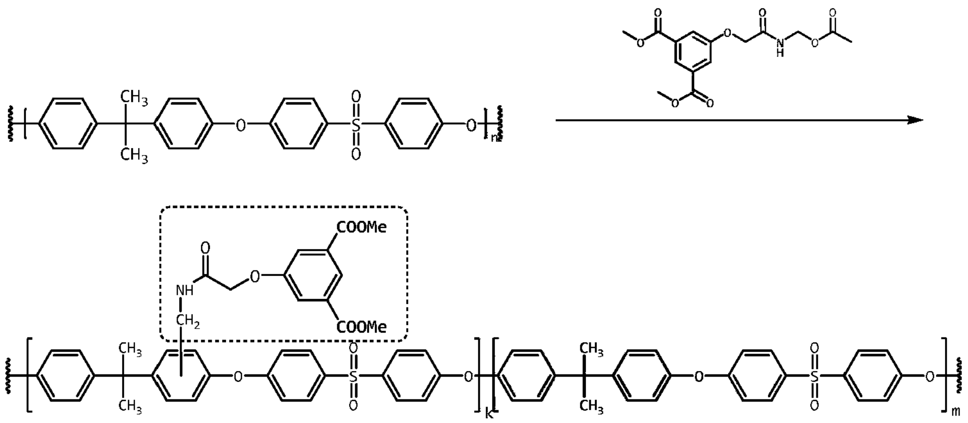

The method of the polysulfone modification used in this example follows the Polysulfone chemical modification General Procedure A.

Experimental parameters which are common across all samples in this example:

| | |
|---|---|
| Polysulfone weight, g | 6.00 |
| Polysulfone repeating units (PRU), mol | 0.0136 |
| Solvent | 1,2-dichloroethane |
| Solvent volume, ml | 40 |
| Modification reagent (MR) | dimethyl 5-(2-((acetoxymethyl)amino)-2-oxoethoxy)isophthalate |
| Catalyst (Cat) | boron trifluoride etherate |
| Cat/MR molar ratio | 6.00 |
| Temperature, ºC | 30 |
| Reaction time, hours | 24 |

Example 39

Comparison of an incorporation of two different complex multivalent functionalities.

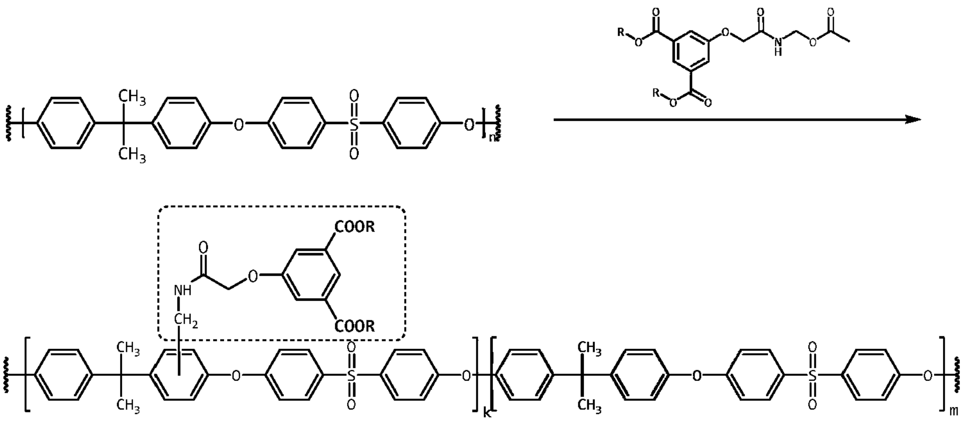

| | |
|---|---|
| 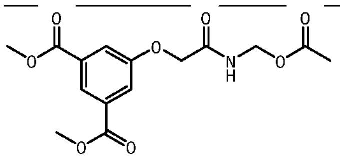 dimethyl 5-(2-((acetoxymethyl)amino)-2-oxoethoxy)isophthalate | 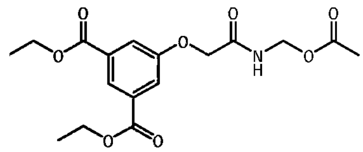 diethyl 5-(2-((acetoxymethyl)amino)-2-oxoethoxy)isophthalate |

The method of the polysulfone modification used in this example follows the Polysulfone chemical modification General Procedure A.

Experimental parameters which are common across all samples in this example:

| | |
|---|---|
| Polysulfone weight, g | 6.00 |
| Polysulfone repeating units (PRU), mol | 0.0136 |
| Solvent | 1,2-dichloroethane |
| Solvent volume, ml | 40 |
| MR/PRU ratio | 0.20 |
| Catalyst (Cat) | boron trifluoride etherate |
| Cat/MR molar ratio | 6.00 |
| Catalyst amount, mol | 0.0163 |
| Catalyst weight, g | 2.309 |
| Temperature, ºC | 30 |

## Claims

1. A process for modifying an aromatic moiety of an aromatic polyether backbone, for obtaining a modified polyether comprising the steps of:

   a) providing at least one aromatic polyether to be modified in dissolved state in an inert organic solvent,
   b) adding at least one modification reagent,
   c) adding at least one catalyst, wherein the at least one catalyst is a boron trifluoride complex, wherein no gaseous boron trifluoride is used
   d) carrying out the process until a desired degree of functionalization of said aromatic polyether backbone is reached,
   e) recovery of the modified aromatic polyether.

Wherein said aromatic polyether comprises at least one of the following repeating units:

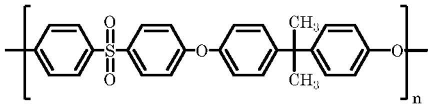 ; 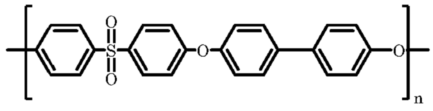 ;

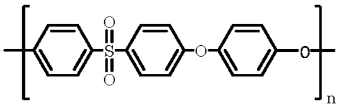 ; 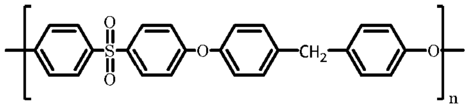 ;

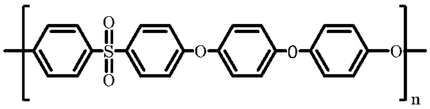 ; 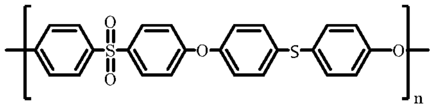 ;

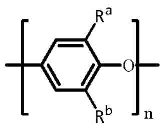

wherin $R^a$ and $R^b$ represent substituents on the benzene ring and each independently comprises alkyl, -aryl, or -arylene-alkyl,

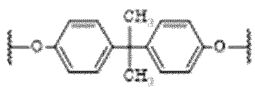

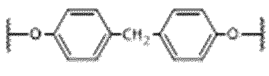

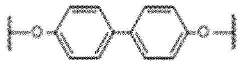

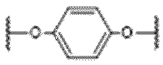

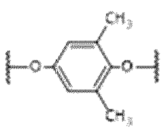

2. Process according to claim 1, **characterized in that** after step b) at least one second modification reagent is added.

3. Process according to one of the preceding claims, **characterized in that** prior to step e) at least one catalyst quencher is added.

4. Process according to one of the preceding claims, **characterized in that** at least one catalyst scavenger is added prior to step e).

5. Process according to one of the preceding claims, **characterized in that** prior to step e) both catalyst quencher and catalyst scavenger are added.

6. Process according to one of the preceding claims, **characterized in that** prior to step e) the reaction solvent replaced by workup solvent.

7. Process according to one of the preceding claims, **characterized in that** the inert organic solvent is selected from the group consisting of halogenated hydrocarbons, halogenated aromatics, nitroalkanes, nitroaromatics or mixture thereof.

8. Process according to one of the preceding claims, **characterized in that** the catalyst is selected from the group consisting of complexes of boron trifuoride with: ethers (dimethyl ether, diethyl ether, di-n-butyl ether, tetrahydrofuran, dioxane, etc.), esters (ethyl acetate, isopropyl acetate, methyl benzoate, ethyl benzoate, dimethyl succinate, methyl p-toluate, etc.), alcohols (methanol, ethanol, n-butanol, 2,2,2-trifluoroethanol, 1,1,1,3,3,3-hexafluoro-2-propanol, etc.), chloroalkanes (dichloromethane, 1,2-dichloroethane, etc.), nitroalkanes (nitromethane, nitroethane, 1-nitropropane, etc.), haloaromatics (chlorobenzene, chlorotoluene, bromobenzene, fluorobenzene, 1,2-difluorbenzene, hexafluorobenzene, alpha,alpha,alpha-trifluorotoluene, etc.), nitroaromatics (nitrobenzene, nitrotoluene, etc.), nitriles (acetonitrile, propionitrile, isobutyronitrile, benzonitrile, etc.), carboxylic acids (acetic acid, propionic acid, pivalic acid, benzoic acid, malonic acid, succinic acid, etc.), sulfonic acids (methanesulfonic acid, benzenesufonic acid, p-toluenesulfonic acid, trifluoromethanesulfonic acid, etc.), water (monohydrate, dihydrate), sulfones (tetramethylene sulfone, dimethyl sulfone, diethyl sulfone, etc.), sulfoxides (dimethyl sulfoxide, diethyl sulfoxide, etc.), thioethers (methyl sulfide, ethyl sulfide, propyl sulfide, isopropyl sulfide, tetrahydrothiophene), mineral acids (phosphoric acid, sulfuric acid, etc.) any derivative thereof, and any combination thereof.

9. Process according to one of the preceding claims, **characterized in that** the catalyst is selected from the group consisting of complexes of boron trifuoride based on ethers, preferably dimethyl ether, diethyl ether, di-n-butyl ether, tetrahydrofuran, dioxane; esters, preferably ethyl acetate, isopropyl acetate, methyl benzoate, ethyl benzoate, dimethyl succinate, methyl p-toluate; carboxylic acids, preferably acetic acid, propionic acid, pivalic acid, benzoic acid, malonic acid, succinic acid, particularly preferred boron trifluoride diethyl etherate and boron trifluoride acetic acid complex.

10. Process according to one of the preceding claims, **characterized in that** the catalyst quencher is selected from the group consisting of alkyl phosphates (trimethyl phosphate, triethyl phosphate, tributyl phosphate, etc.), carboxylic acid amides, (dimethyl formamide, dimethyl acetamide, N-methyl pyrrolidone, N-butyl pyrrolidone, etc.), ureas (dimethylethylene urea, tetramethyl urea, 1,3-dimethyl-2-imidazolidinone, 1,3-dimethyl-3,4,5,6-tetrahydro-2(1H)-pyrimidinone, etc.), any derivative thereof, and any combination thereof.

11. Process according to one of the preceding claims, **characterized in that** the scavenger is selected from the group consisting of hydrofluoric acid salts (ammonium fluoride, lithium fluoride, sodium fluoride, potassium fluoride, cesium fluoride, rubidium fluoride, magnesium fluoride, calcium fluoride, strontium fluoride, barium fluoride, etc.), sulfuric acid salts (sodium sulfate, potassium sulfate, etc.), phosphoric acid salts (trisodium phosphate, tripotassium phosphate, etc.), pyrophosphoric acid salts (sodium pyrophosphate, potassium pyrophosphate, etc.), .), any derivative thereof, and any combination thereof.

12. Process according to one of the preceding claims, **characterized in that** the at least one modifying reagent is selected from a group of compounds of the general structure 1 (**GS1**)

**Fn-Sp-Lg** (GS1)

wherein **Fn** is functional moiety selected from structures of General formula 1 (GF1), or General formula 2 (GF2), or General formula 3 (GF3), or General formula 4 (GF4), or General formula 5 (GF5):

**General formula 1 (GF1)**

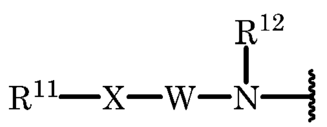

**GF1**

**General formula 2 (GF2)**

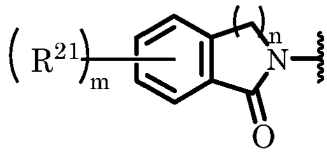

**GF2**

**General formula 3 (GF3)**

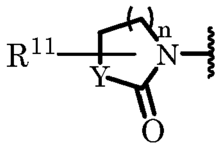

**GF3**

**General formula 4 (GF4)**

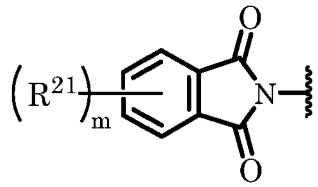

**GF4**

**General formula 5 (GF5)**

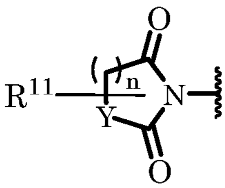

**GF5**

wherein **Sp** is spacing moiety selected from structure of General formula 6 (GF6):

**General formula 6 (GF6)**

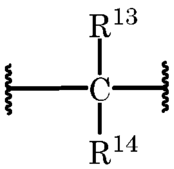

**GF6**

wherein **Lg** is a leaving group moiety selected from structures of General formula 7 (**GF7**), or General formula 8 (**GF8**), or General formula 9 (**GF9**), or General formula 10 (**GF10**), or General formula 5 (**GF5**):

**General formula 7 (GF7)**

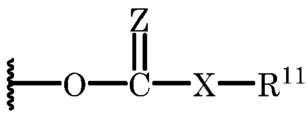

**GF7**

**General formula 8 (GF8)**

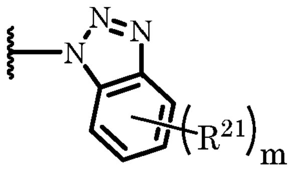

**GF8**

**General formula 9 (GF9)**

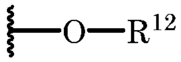

**GF9**

**General formula 10 (GF10)**

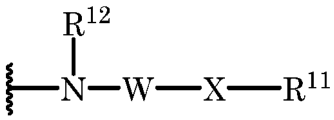

**GF10**

in which:

**W** comprises **-CO-** (carbonyl) or **-$SO_2$-** (sulfonyl) group;
**X** comprises **-$NR^{111}$-** ($R^{111}$ selected from hydrogen or the group consisting of lower alkyl ($C_1$ - $C_{10}$), **-O-** (oxygen), or direct bond;
**$R^{11}$** - comprises (selected from) alkyl, heteroalkyl, -aryl, -arylene-alkyl, -alkylene-aryl, or - alkylene-arylene-alkyl (optionally substituted);
**$R^{12}$** - comprises hydrogen or the group consisting of lower alkyl ($C_1$ - $C_{10}$);
**Y** comprises **-$NR^{111}$-, -O-** (oxygen), or methylene group (optionally substituted);
**n** represents an integer of 1 to 4;
**$R^{13}$** and **$R^{14}$** independently each other comprises **hydrogen, COOH, COOR$^{111}$, CON(R$^{111}$)$_2$,** or the **group consisting of lower alkyl** ($C_1$ - $C_{10}$);
**$R^{21}$** - represents a substituent on the benzene ring and each independently comprises halo group, cyano group, trifluoromethylsulfonyl group, nitro group, trihalomethyl group, keto group, formyl group, carboxyl group, alkoxycarbonyl group, aminocarbonyl group, sulfonyl group, sulfonamide group; and **m** represents an integer of 0 to 4;
**Z** comprises **NH** or **O** (oxygen);

**13.** Modified polyether obtainable in a process according to one of the preceding claims wherein the at least one of the aromatic moieties in the polyether backbone is modified with at least one of the following groups having one of the general structure 2 (**GS2**):

**Fn-Sp-Polyether** **(GS2)**

wherein **Fn** and **Sp** have the meanings as defined in claims 12.

## Patentansprüche

1. Verfahren zum Modifizieren einer aromatischen Einheit eines aromatischen Polyethergerüstes, um einen modifizierten Polyether zu erhalten, mit den folgenden Schritten:

   a) Bereitstellen mindestens eines zu modifizierenden aromatischen Polyethers im gelösten Zustand in einem inerten organischen Lösungsmittel,
   b) Zugabe mindestens eines Modifikationsreagens,
   c) Zugabe mindestens eines Katalysators, wobei der mindestens eine Katalysator ein Bortrifluoridkomplex ist, wobei kein gasförmiges Bortrifluorid verwendet wird,
   d) Durchführen des Verfahrens, bis ein gewünschter Funktionalisierungsgrad der aromatischen Polyethergerüstes erreicht ist,
   e) Rückgewinnung des modifizierten aromatischen Polyethers,
   wobei der aromatische Polyether mindestens eine der folgenden Grundeinheiten umfasst:

   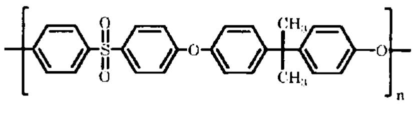 ; 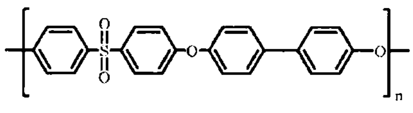 ;

   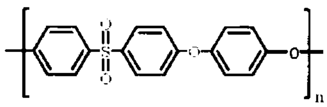 ; 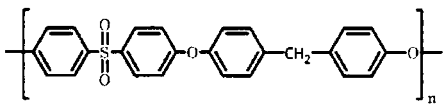 ;

   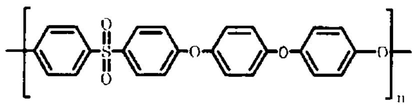 ; 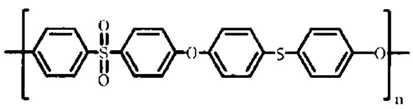 ;

   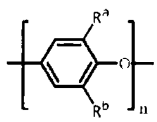

   wobei $R^a$ und $R^b$ Substituenten an dem Benzolring repräsentieren und jeweils unabhängig voneinander Alkyl, -Aryl oder -Arylen-Alkyl umfassen,

   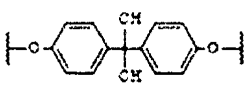

   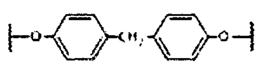

   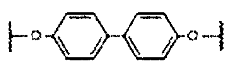

   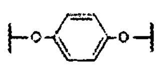

   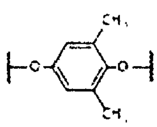

2. Verfahren nach Anspruch 1, **dadurch gekennzeichnet, dass** nach Schritt b) mindestens ein zweites Modifikationsreagens zugesetzt wird.

3. Verfahren nach einem der vorhergehenden Ansprüche, **dadurch gekennzeichnet, dass** vor Schritt e) mindestens ein Katalysatorquencher zugesetzt wird.

4. Verfahren nach einem der vorhergehenden Ansprüche, **dadurch gekennzeichnet, dass** vor Schritt e) mindestens ein Katalysatorfänger zugesetzt wird.

5. Verfahren nach einem der vorhergehenden Ansprüche, **dadurch gekennzeichnet, dass** vor Schritt e) sowohl Katalysatorquencher als auch Katalysatorfänger zugesetzt werden.

6. Verfahren nach einem der vorhergehenden Ansprüche, **dadurch gekennzeichnet, dass** vor Schritt e) das Reaktionslösungsmittel durch Aufarbeitungslösungsmittel ersetzt wird.

7. Verfahren nach einem der vorhergehenden Ansprüche, **dadurch gekennzeichnet, dass** das inerte organische Lösungsmittel aus der aus halogenierten Kohlenwasserstoffen, halogenierten Aromaten, Nitroalkanen, Nitroaromaten oder einer Mischung davon bestehenden Gruppe ausgewählt ist.

8. Verfahren nach einem der vorhergehenden Ansprüche, **dadurch gekennzeichnet, dass** der Katalysator ausgewählt ist aus der Gruppe bestehend aus Komplexen von Bortrifluorid mit: Ethern (Dimethylether, Diethylether, Di-n-butylether, Tetrahydrofuran, Dioxan, etc.), Estern (Ethylacetat, Isopropylacetat, Methylbenzoat, Ethylbenzoat, Dimethylsuccinat, Methyl-p-toluat, etc.), Alkoholen (Methanol, Ethanol, n-Butanol, 2,2,2-Trifluorethanol, 1,1,1,3,3,3-Hexafluor-2-propanol, etc.), Chloralkanen (Dichlormethan, 1,2-Dichlorethan, etc.), Nitroalkanen (Nitromethan, Nitroethan, 1-Nitropropan, etc.), Halogenaromaten (Chlorbenzol, Chlortoluol, Brombenzol, Fluorbenzol, 1,2-Difluorbenzol, Hexafluorbenzol, alpha,alpha,alpha-Trifluortoluol usw.), Nitroaromaten (Nitrobenzol, Nitrotoluol, etc.), Nitrilen (Acetonitril, Propionitril, Isobutyronitril, Benzonitril, etc.), Carbonsäuren (Essigsäure, Propionsäure, Pivalinsäure, Benzoesäure, Malonsäure, Bernsteinsäure, etc.), Sulfonsäuren (Methansulfonsäure, Benzolsulfonsäure, p-Toluolsulfonsäure, Trifluormethansulfonsäure, etc.), Wasser (Monohydrat, Dihydrat), Sulfonen (Tetramethylensulfon, Dimethylsulfon, Diethylsulfon, etc.), Sulfoxiden (Dimethylsulfoxid, Diethylsulfoxid, etc.), Thioethern (Methylsulfid, Ethylsulfid, Propylsulfid, Isopropylsulfid, Tetrahydrothiophen), Mineralsäuren (Phosphorsäure, Schwefelsäure, etc.), jedem Derivat davon und jeder Kombination davon.

9. Verfahren nach einem der vorhergehenden Ansprüche, **dadurch gekennzeichnet, dass** der Katalysator ausgewählt ist aus der Gruppe bestehend aus Komplexen von Bortrifluorid auf der Basis von Ethern, vorzugsweise Dimethylether, Diethylether, Di-n-butylether, Tetrahydrofuran, Dioxan; Estern, vorzugsweise Ethylacetat, Isopropylacetat, Methylbenzoat, Ethylbenzoat, Dimethylsuccinat, Methyl-p-toluat; Carbonsäuren, vorzugsweise Essigsäure, Propionsäure, Pivalinsäure, Benzoesäure, Malonsäure, Bernsteinsäure, besonders bevorzugt Bortrifluorid-Diethyletherat und Bortrifluorid-Essigsäure-Komplex.

10. Verfahren nach einem der vorhergehenden Ansprüche, **dadurch gekennzeichnet, dass** der Katalysatorquencher ausgewählt ist aus der Gruppe bestehend aus Alkylphosphaten (Trimethylphosphat, Triethylphosphat, Tributylphosphat, etc.), Carbonsäureamiden (Dimethylformamid, Dimethylacetamid, N-Methylpyrrolidon, N-Butylpyrrolidon etc.), Harnstoffen (Dimethylethylenharnstoff, Tetramethylharnstoff, 1,3-Dimethyl-2-imidazolidinon, 1,3-Dimethyl-3,4,5,6-tetrahydro-2(1H)-pyrimidinon, etc.), jedem Derivat davon und jeder Kombination davon.

11. Verfahren nach einem der vorhergehenden Ansprüche, **dadurch gekennzeichnet, dass** das Abfangmittel ausgewählt ist aus der Gruppe bestehend aus Flusssäuresalzen (Ammoniumfluorid, Lithiumfluorid, Natriumfluorid, Kaliumfluorid, Cäsiumfluorid, Rubidiumfluorid, Magnesiumfluorid, Calciumfluorid, Strontiumfluorid, Bariumfluorid, etc.), Schwefelsäuresalzen (Natriumsulfat, Kaliumsulfat, etc.), Phosphorsäuresalzen (Trinatriumphosphat, Trikaliumphosphat, etc.), Pyrophosphorsäuresalzen (Natriumpyrophosphat, Kaliumpyrophosphat, etc.), jedem Derivat davon und jeder Kombination davon.

12. Verfahren nach einem der vorhergehenden Ansprüche, **dadurch gekennzeichnet, dass** das mindestens eine Modifikationsreagens ausgewählt ist aus einer Gruppe von Verbindungen der allgemeinen Struktur 1 **(GS1)**

**Fn-Sp-Lg** (GS1)

worin **Fn** eine funktionelle Einheit ist, ausgewählt aus Strukturen der allgemeinen Formel 1 (GF1) oder der allgemeinen Formel 2 (GF2) oder der allgemeinen Formel 3 (GF3) oder der allgemeinen Formel 4 (GF4) oder der allgemeinen Formel 5 (GF5):

**Allgemeine Formel 1 (GF1)**

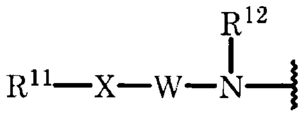

GF1

**Allgemeine Formel 2 (GF2)**

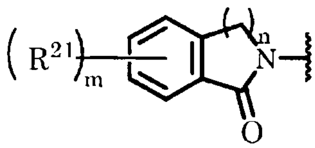

GF2

**Allgemeine Formel 3 (GF3)**

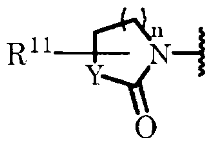

GF3

**Allgemeine Formel 4 (GF4)**

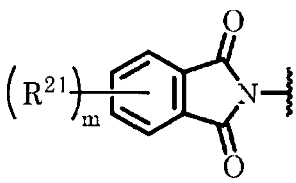

GF4

**Allgemeine Formel 5 (GF5)**

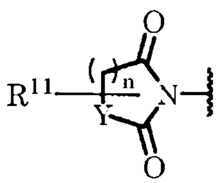

GF5

worin **Sp** eine Abstandseinheit ist, ausgewählt aus der Struktur der allgemeinen Formel 6 (GF6):

## Allgemeine Formel 6 (GF6)

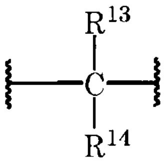

GF6

worin **Lg** eine Abgangsgruppeneinheit ist, ausgewählt aus Strukturen der allgemeinen Formel 7 (**GF7**) oder der allgemeinen Formel 8 (**GF8**) oder der allgemeinen Formel 9 (**GF9**) oder der allgemeinen Formel 10 (**GF10**) oder der allgemeinen Formel 5 (**GF5**):

## Allgemeine Formel 7 (GF7)

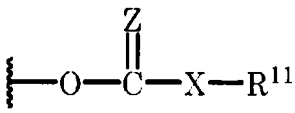

GF7

## Allgemeine Formel 8 (GF8)

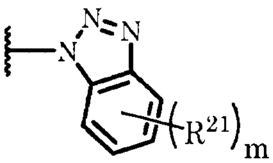

GF8

## Allgemeine Formel 9 (GF9)

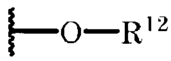

GF9

## Allgemeine Formel 10 (GF10)

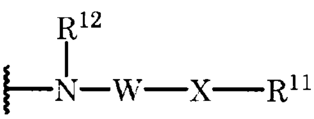

GF10

in der:

**W eine -CO-** (Carbonyl) oder **-$SO_2$-** (Sulfonyl) Gruppe umfasst;
**X -$NR^{111}$-** ($R^{111}$ ausgewählt aus Wasserstoff oder der Gruppe bestehend aus Niederalkyl ($C_1$ - $C_{10}$)), **-O-** (Sauerstoff), oder eine direkte Bindung umfasst;
**$R^{11}$** - Alkyl, Heteroalkyl, -Aryl, -Arylen-Alkyl, -Alkylen-Aryl oder -Alkylen-Arylen-Alkyl (optional substituiert) umfasst (daraus ausgewählt ist);
**$R^{12}$** - Wasserstoff oder die aus Niederalkyl ($C_1$ - $C_{10}$) bestehende Gruppe umfasst;
**Y -$NR^{111}$-, -O-** (Sauerstoff), oder eine Methylengruppe (optional substituiert) umfasst;
**n** eine ganze Zahl von 1 bis 4 repräsentiert;
**$R^{13}$** und **$R^{14}$** jeweils unabhängig voneinander **Wasserstoff, COOH, $COOR^{111}$, $CON(R^{111})_2$,** oder **die aus**

**Niederalkyl** ($C_1$ - $C_{10}$) **bestehende Gruppe** umfassen;
**$R^{21}$** - einen Substituenten an dem Benzolring repräsentiert und jeweils unabhängig voneinander eine Halogengruppe, Cyanogruppe, Trifluormethylsulfonylgruppe, Nitrogruppe, Trihalogenmethylgruppe, Ketogruppe, Formylgruppe, Carboxylgruppe, Alkoxycarbonylgruppe, Aminocarbonylgruppe, Sulfonylgruppe, Sulfonamidgruppe umfasst; und **m** eine ganze Zahl von 0 bis 4 repräsentiert;
**Z NH** oder **O** (Sauerstoff) umfasst.

**13.** Modifizierter Polyether, erhältlich in einem Verfahren nach einem der vorhergehenden Ansprüche, wobei die mindestens eine der aromatischen Einheiten in dem Polyethergerüst mit mindestens einer der folgenden Gruppen mit einer der allgemeinen Struktur 2 (**GS2**) modifiziert ist:

**Fn-Sp- Polyether** **(GS2)**

worin **Fn** und **Sp** die in Anspruch 12 definierten Bedeutungen haben.

## Revendications

**1.** Procédé de modification d'une fraction aromatique d'un squelette de polyéther aromatique, pour obtenir un polyéther modifié, comprenant les étapes suivantes :

a) fournir au moins un polyéther aromatique à modifier à l'état dissous dans un solvant organique inerte,
b) ajouter au moins un réactif de modification,
c) ajouter au moins un catalyseur, dans lequel ledit au moins un catalyseur est un complexe de trifluorure de bore, dans lequel aucun trifluorure de bore gazeux n'est utilisé,
d) exécuter le procédé jusqu'à ce qu'un degré souhaité de fonctionnalisation dudit squelette de polyéther aromatique soit atteint,
e) récupération du polyéther aromatique modifié,
dans lequel ledit polyéther aromatique comprend au moins l'une des unités répétitives suivantes :

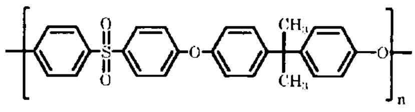 ; 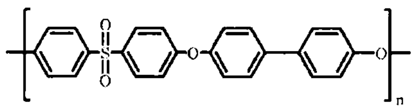 ;

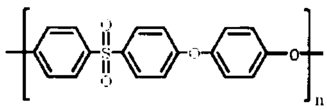 ; 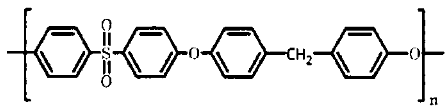 ;

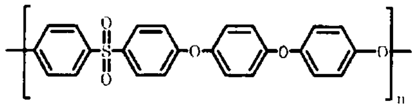 ; 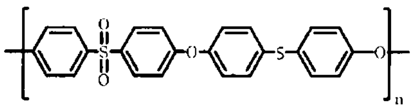 ;

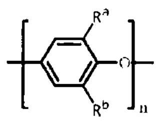

dans lequel $R^a$ et $R^b$ représentent des substituants sur le cycle benzénique et comprennent chacun indépendamment un groupe alkyle, -aryle ou -arylène-alkyle,

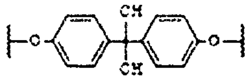

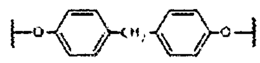

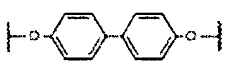

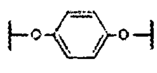

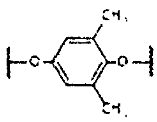

2. Procédé selon la revendication 1, **caractérisé en ce qu'**après l'étape b), au moins un deuxième réactif de modification est ajouté.

3. Procédé selon l'une quelconque des revendications précédentes, **caractérisé en ce qu'**avant l'étape e), au moins un extincteur catalytique est ajouté.

4. Procédé selon l'une quelconque des revendications précédentes, **caractérisé en ce qu'**au moins un piégeur catalytique est ajouté avant l'étape e).

5. Procédé selon l'une quelconque des revendications précédentes, **caractérisé en ce qu'**avant l'étape e), l'extincteur catalytique et le piégeur catalytique sont tous deux ajoutés.

6. Procédé selon l'une quelconque des revendications précédentes, **caractérisé en ce qu'**avant l'étape e), le solvant de réaction est remplacé par le solvant de traitement.

7. Procédé selon l'une quelconque des revendications précédentes, **caractérisé en ce que** le solvant organique inerte est choisi dans le groupe constitué d'hydrocarbures halogénés, d'aromatiques halogénés, de nitroalcanes, de nitroaromatiques ou d'un mélange de ceux-ci.

8. Procédé selon l'une quelconques des revendications précédentes, **caractérisé en ce que** le catalyseur est choisi dans le groupe constitué par des complexes de trifluorure de bore avec: des éthers (diméthyléther, diéthyléther, di-n-butyléther, tétrahydrofurane, dioxane, etc.), des esters (acétate d'éthyle, acétate d'isopropyle, benzoate de méthyle, benzoate d'éthyle, succinate de diméthyle, p-toluate de méthyle, etc.), des alcools (méthanol, éthanol, n-butanol, 2,2,2-trifluoroéthanol, 1,1,1,3,3,3-hexafluoro-2-propanol, etc.), des chloroalcanes (dichlorométhane, 1,2-dichloroéthane, etc.), des nitroalcanes (nitrométhane, nitroéthane, 1-nitropropane, etc.), des halogénoaromatiques (chlorobenzène, chlorotoluène, bromobenzène, fluorobenzène, 1,2-difluorobenzène, hexafluorobenzène, alpha,alpha,alpha-trifluorotoluène, etc.), des nitroaromatiques (nitrobenzène, nitrotoluène, etc.), des nitriles (acétonitrile, propionitrile, isobutyronitrile, benzonitrile, etc.), des acides carboxyliques (acide acétique, acide propionique, acide pivalique, acide benzoïque, acide malonique, acide succinique, etc.), des acides sulfoniques (acide méthanesulfonique, acide benzènesulfonique, acide p-toluènesulfonique, acide trifluorométhanesulfonique, etc.), de l'eau (monohydratée, dihydratée), des sulfones (tétraméthylène sulfone, diméthyl sulfone, diéthyl sulfone, etc.), des sulfoxydes (diméthylsulfoxyde, diéthylsulfoxyde, etc.), des thioéthers (sulfure de méthyle, sulfure d'éthyle, sulfure de propyle, sulfure d'isopropyle, tétrahydrothiophène), des acides minéraux (acide phosphorique, acide sulfurique, etc.), tout dérivé de ceux-ci et toute combinaison de ceux-ci.

9. Procédé selon l'une quelconque des revendications précédentes, **caractérisé en ce que** le catalyseur est choisi dans le groupe constitué par des complexes de trifluorure de bore à base d'éthers, de préférence le diméthyléther, le diéthyléther, le di-n-butyléther, le tétrahydrofurane, le dioxane ; des esters, de préférence l'acétate d'éthyle, l'acétate d'isopropyle, le benzoate de méthyle, le benzoate d'éthyle, le succinate de diméthyle, le p-toluate de méthyle ; des acides carboxyliques, de préférence l'acide acétique, l'acide propionique, l'acide pivalique, l'acide benzoïque, l'acide malonique, l'acide succinique, particulièrement de préférence le trifluorure de bore diéthylétherate et le complexe trifluorure de bore acide acétique.

**10.** Procédé selon l'une quelconque des revendications précédentes, **caractérisé en ce que** l'extincteur catalytique est choisi dans le groupe constitué par les phosphates d'alkyle (phosphate de triméthyle, phosphate de triéthyle, phosphate de tributyle, etc.), les amides d'acides carboxyliques (diméthylformamide, diméthylacétamide, N-méthylpyrrolidone, N-butylpyrrolidone, etc.), les urées (diméthyléthylèneurée, tétraméthylurée, 1,3-diméthyl-2-imidazolidinone, 1,3-diméthyl-3,4,5,6-tétrahydro-2(1H)-pyrimidinone, etc.), tout dérivé de ceux-ci, et toute combinaison de ceux-ci.

**11.** Procédé selon l'une quelconque des revendications précédentes, **caractérisé en ce que** le piégeur est choisi dans le groupe constitué de sels d'acide fluorhydrique (fluorure d'ammonium, fluorure de lithium, fluorure de sodium, fluorure de potassium, fluorure de césium, fluorure de rubidium, fluorure de magnésium, fluorure de calcium, fluorure de strontium, fluorure de baryum, etc.), de sels d'acide sulfurique (sulfate de sodium, sulfate de potassium, etc.), de sels d'acide phosphorique (phosphate trisodique, phosphate tripotassique, etc.), de sels d'acide pyrophosphorique (pyrophosphate de sodium, pyrophosphate de potassium, etc.), tout dérivé de ceux-ci et toute combinaison de ceux-ci.

**12.** Procédé selon l'une quelconque des revendications précédentes, **caractérisé en ce que** ledit au moins un réactif modificateur est choisi dans un groupe de composés de la structure générale 1 **(GS1)**

**Fn-Sp-Lg** (GS1)

dans laquelle **Fn** est une fraction fonctionnelle choisie parmi les structures de formule générale 1 (GF1), ou de formule générale 2 (GF2), ou de formule générale 3 (GF3), ou de formule générale 4 (GF4), ou de formule générale 5 (GF5) :

**Formule générale 1 (GF1)**

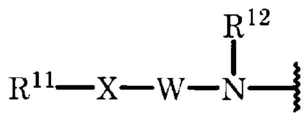

**GF1**

**Formule générale 2 (GF2)**

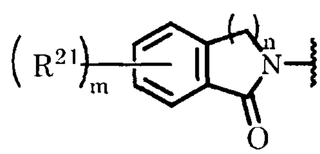

**GF2**

**Formule générale 3 (GF3)**

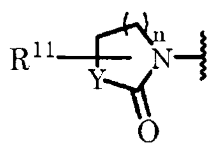

**GF3**

**Formule générale 4 (GF4)**

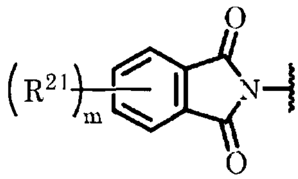 GF4

**Formule générale 5 (GF5)**

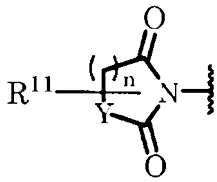 GF5

dans laquelle **Sp** est une fraction d'espacement choisie parmi la structure de formule générale 6 (GF6) :

**Formule générale 6 (GF6)**

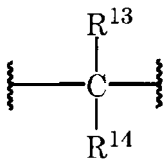 GF6

dans laquelle **Lg** est une fraction de groupe partant choisie parmi les structures de formule générale 7 (**GF7**), ou de formule générale 8 (**GF8**), ou de formule générale 9 (**GF9**), ou de formule générale 10 (**GF10**), ou de formule générale 5 (**GF5**) :

**Formule générale 7 (GF7)**

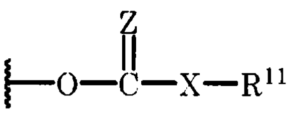 GF7

**Formule générale 8 (GF8)**

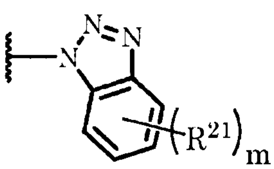 GF8

**Formule générale 9 (GF9)**

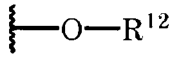

**GF9**

**Formule générale 10 (GF10)**

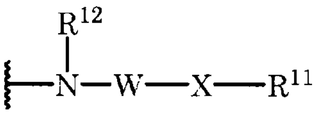

**GF10**

dans laquelle :

**W** comprend un groupe **-CO-** (carbonyle) ou **-$SO_2$-** (sulfonyle) ;
**X** comprend **-$NR^{111}$-** ($R^{111}$ étant choisi parmi l'hydrogène ou le groupe constitué d'un alkyle inférieur ($C_1$ - $C_{10}$), **-O-** (oxygène) ou une liaison directe ;
**$R^{11}$** - comprend (choisi parmi) un groupe alkyle, hétéroalkyle, -aryle, -arylène-alkyle, - alkylène-aryle ou -alkylène-arylène-alkyle (éventuellement substitué) ;
**$R^{12}$** - comprend de l'hydrogène ou le groupe constitué d'alkyle inférieur ($C_1$ - $C_{10}$) ;
**Y** comprend **-$NR^{111}$-, -O-** (oxygène) ou un groupe méthylène (éventuellement substitué) ; **n** représente un nombre entier de 1 à 4 ;
**$R^{13}$** et **$R^{14}$** comprennent indépendamment l'un de l'autre de **l'hydrogène,** un groupe **COOH, $COOR^{111}$, $CON(R^{111})_2$,** ou le **groupe constitué d'alkyle inférieur** ($C_1$ - $C_{10}$) ;
**$R^{21}$** - représente un substituant sur le cycle benzénique et comprend indépendamment un groupe halogéno, un groupe cyano, un groupe trifluorométhylsulfonyle, un groupe nitro, un groupe trihalogénométhyle, un groupe cétone, un groupe formyle, un groupe carboxyle, un groupe alcoxycarbonyle, un groupe aminocarbonyle, un groupe sulfonyle, un groupe sulfonamide ; et **m** représente un nombre entier de 0 à 4 ;
**Z** comprend **NH** ou **O** (oxygène).

**13.** Polyéther modifié pouvant être obtenu par un procédé selon l'une quelconque des revendications précédentes, dans lequel au moins l'un des fragments aromatiques dans le squelette du polyéther est modifié par l'au moins un des groupes suivants ayant l'une des structures générales 2 **(GS2)** :

**Fn-Sp-Polyéther** **(GS2)**

dans laquelle **Fn** et **Sp** ont les significations comme définies dans la revendication 12.

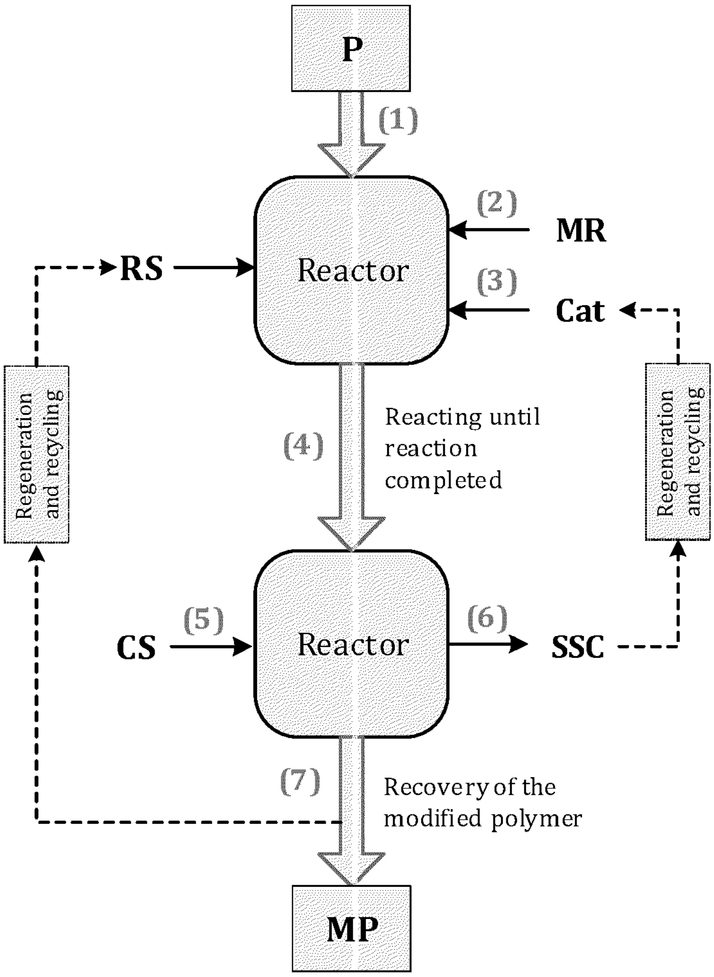


**P** - the polymer to be modified; **MP** - the resulting modified polymer; **RS** - reaction solvent; **MR** - modification reagent; **Cat** – catalyst; **CS** - catalyst scavenger; **SSC** - solid scavenged catalyst.

FIG 1

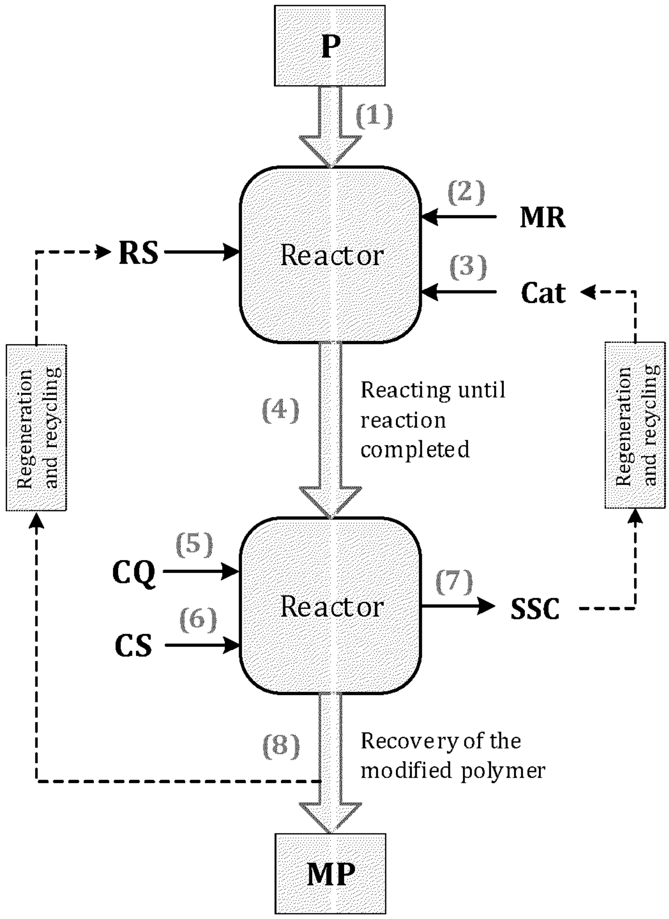


**P** - the polymer to be modified; **MP** - the resulting modified polymer; **RS** - reaction solvent; **MR** - modification reagent; **Cat** – catalyst; **CS** - catalyst scavenger; **CQ** - catalyst quencher; **SSC** - solid scavenged catalyst.

FIG 2

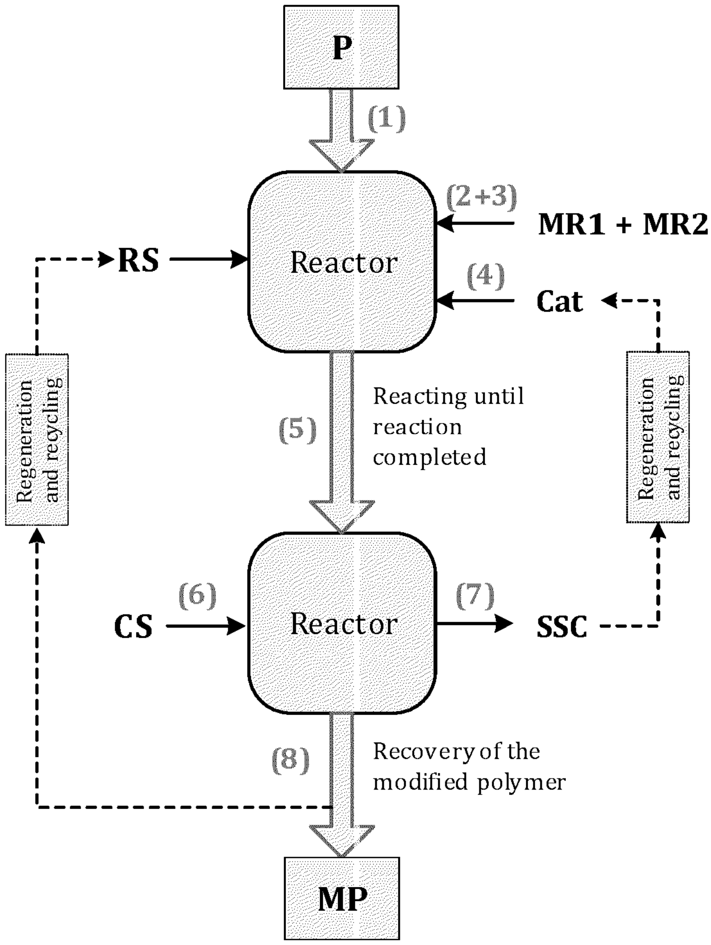


**P** - the polymer to be modified; **MP** - the resulting modified polymer; **RS** - reaction solvent; **MR** - modification reagent (**MR1** – the first modification reagent, **MR2** – the second modification reagent); **Cat** – catalyst; **CS** - catalyst scavenger; **SSC** - solid scavenged catalyst.

FIG 3

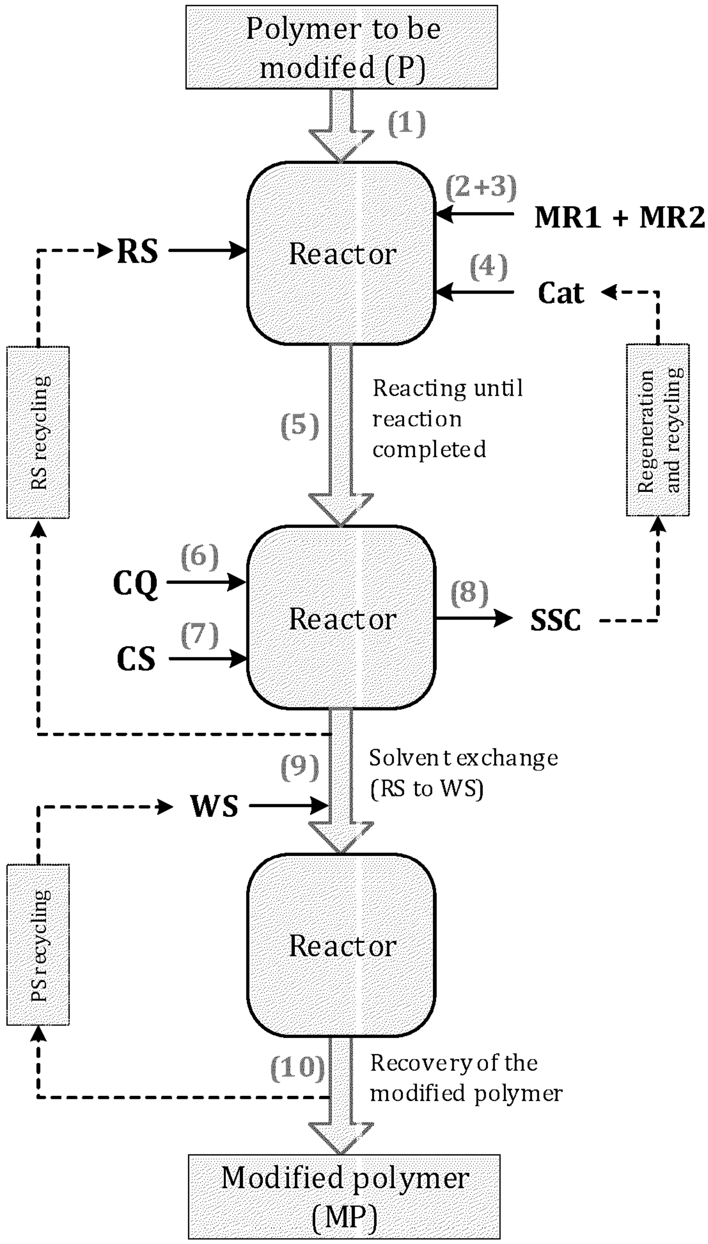


**P** - the polymer to be modified; **MP** - the resulting modified polymer; **RS** - reaction solvent; **MR** - modification reagent (**MR1** – the first modification reagent, **MR2** – the second modification reagent); **Cat** – catalyst; **CS** - catalyst scavenger; **CQ** - catalyst quencher; **WS** – workup solvent; **SSC** - solid scavenged catalyst.

FIG 4

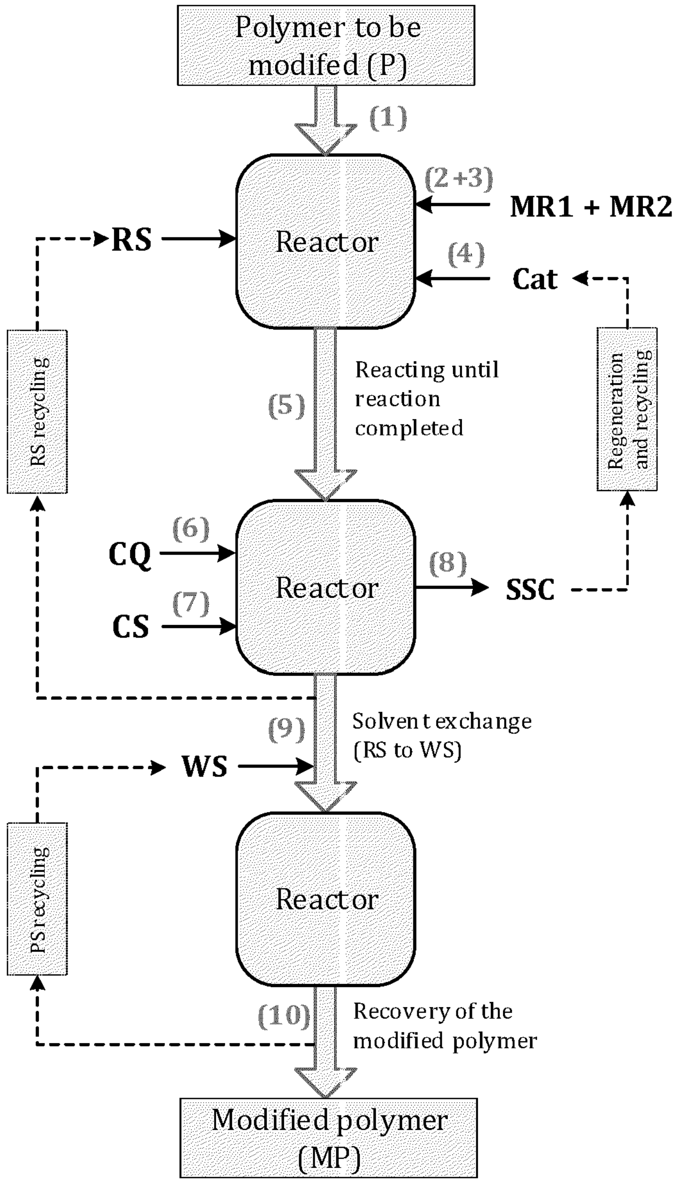


**P** - the polymer to be modified; **MP** - the resulting modified polymer; **RS** - reaction solvent; **MR** - modification reagent (**MR1** – the first modification reagent, **MR2** – the second modification reagent); **Cat** – catalyst; **CS** - catalyst scavenger; **CQ** - catalyst quencher; **WS** – workup solvent; **SSC** - solid scavenged catalyst.

FIG 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2152780 A1
- US 3733302 A
- EP 2725050 A1


### Non-patent literature cited in the description


- **JESSOP**. Searching for green solvents. *Green Chemistry*, 2011, vol. 13 (6), 1391-1398
- **BYRNE, F. P.** ; **JIN, S.** ; **PAGGIOLA, G.** ; **PETCHEY, T. H.** ; **CLARK, J. H.** ; **FARMER, T. J.** ; **SHERWOOD, J.** Tools and techniques for solvent selection: green solvent selection guides. *Sustainable Chemical Processes*, 2016, vol. 4 (1), 7
- **JESSOP, P. G.** Searching for green solvents. *Green Chemistry*, 2011, vol. 13 (6), 1391-1398
- **MARIA, P. C.** ; **GAL, J. F.** A Lewis basicity scale for nonprotogenic solvents: enthalpies of complex formation with boron trifluoride in dichloromethane. *The Journal of Physical Chemistry*, 1985, vol. 89 (7), 1296-1304
- Boron trifluoride co-ordination compounds. **GREENWOOD, N. N.** ; **MARTIN, R. L.** Quarterly Reviews. Chemical Society, 1954, vol. 8, 1-39
- Boron Fluoride and Its Compounds as Catalysts in Organic Chemistry. **TOPCHIEV, A. V.** ; **ZAVGORODNII, S. V.** ; **PAUSHKIN, Y. M.** International Series of Monographs on Organic Chemistry. Pergamon Press, 1959, vol. 2